(19) **Europäisches Patentamt**
**European Patent Office**
**Office européen des brevets**

(11) **EP 1 410 098 B1**

(12) **EUROPÄISCHE PATENTSCHRIFT**

(45) Veröffentlichungstag und Bekanntmachung des Hinweises auf die Patenterteilung:
**03.09.2008  Patentblatt 2008/36**

(21) Anmeldenummer: **01909490.3**

(22) Anmeldetag: **17.01.2001**

(51) Int Cl.:
***G02C 7/02*** *(2006.01)*

(86) Internationale Anmeldenummer:
**PCT/DE2001/000188**

(87) Internationale Veröffentlichungsnummer:
**WO 2001/057584 (09.08.2001 Gazette 2001/32)**

(54) **VERFAHREN ZUR HERSTELLUNG VON PROGRESSIVEN BRILLENGLÄSERN**

METHOD FOR PRODUCING PROGRESSIVE EYEGLASS LENSES

PROCEDE DE PRODUCTION DE VERRES PROGRESSIFS

(84) Benannte Vertragsstaaten:
**AT BE CH CY DE DK ES FI FR GB GR IE IT LI LU MC NL PT SE TR**

(30) Priorität: **17.01.2000  DE 10001726**
　　　　　　**25.04.2000  DE 10020244**
　　　　　　**28.04.2000  DE 10021047**

(43) Veröffentlichungstag der Anmeldung:
**21.04.2004  Patentblatt 2004/17**

(73) Patentinhaber: **Rodenstock GmbH**
**80469 München (DE)**

(72) Erfinder:
　• **BAUMBACH, Peter**
　　**81543 München (DE)**
　• **ESSER, Gregor**
　　**81735 München (DE)**

　• **MÜLLER, Werner**
　　**75443 Ötisheim (DE)**
　• **BROSIG, Jochen**
　　**82031 Grünwald (DE)**
　• **HAIMERL, Walter**
　　**80337 München (DE)**
　• **PFEIFFER, Herbert**
　　**81247 München (DE)**
　• **ALTHEIMER, Helmut**
　　**87650 Lauchdorf (DE)**

(74) Vertreter: **Müller-Boré & Partner**
**Patentanwälte**
**Grafinger Strasse 2**
**81671 München (DE)**

(56) Entgegenhaltungen:
**EP-A- 0 880 046　　　WO-A-99/63392**
**DE-A- 19 701 312　　DE-A- 19 917 314**
**US-A- 5 444 503　　　US-A- 5 861 935**

EP 1 410 098 B1

## Beschreibung

### Technisches Gebiet

Die Erfindung bezieht sich auf ein Verfahren zur Herstellung von progressiven Brillengläsern, von denen jedes entsprechend den individuellen Daten eines bestimmten Brillenträgers gefertigt ist, gemäß dem Oberbegriff des Patentanspruchs 1.

### Stand der Technik

Verfahren, von denen bei der Formulierung des Oberbegriffs des Patentanspruchs 1 ausgegangen wird, sind beispielsweise aus der US-PS 2 878 721, der DE-A-43 37 369, der DOZ 8/96, S. 44-46, der NOJ 11/97, S. 18 ff oder der DE-A-197 01 312 bekannt. Auf diese Druckschriften wird im übrigen zur Erläuterung aller hier nicht näher beschrieben Einzelheiten ausdrücklich Bezug genommen.

Bei der Herstellung von Brillengläsern wird derzeit in der Praxis - gleichgültig ob es sich um Einstärken-, Mehrstärken- oder um progressive Brillengläser handelt - wie folgt vorgegangen:

Zunächst wird ein einseitig fertiges, meist "rohrundes", d.h. nicht (fassungsspezifisch) vorgerandetes Brillenglas hergestellt. Aus fertigungstechnischen Gründen ist die fertige Fläche des einseitig fertigen Brillenglases in der Regel die Vorderfläche; der Grund hierfür ist, daß die sogenannten "Rezeptglas-Fertigungen" fast ausschließlich darauf eingerichtet sind, die konkave, d. h. die augenseitige Fläche zu bearbeiten. In den Rezeptglas-Fertigungen wird die augenseitige Fläche erst nach Vorliegen einer konkreten Bestellung entsprechend den sogenannten Rezeptdaten des jeweiligen Brillenträgers gefertigt. Unter Rezeptdaten werden dabei bei progressiven Brillengläsern die im sogenannten Fernbezugspunkt erforderliche Wirkung, die Addition sowie gegebenenfalls der Betrag und die Achslage einer astigmatischen Wirkung verstanden.

Bei den derzeit auf dem Markt gängigen progressiven Brillengläsern ist nahezu ausschließlich die Vorderfläche die progressive Fläche. Der Grund hierfür ist, daß die in der Vergangenheit üblichen Berechnungs- und Fertigungsverfahren eine individualisierte Berechnung und vor allem eine individualisierte Fertigung der progressiven Fläche bei "durchsetzbaren bzw. erzielbaren" Verkaufspreisen schwierig gemacht haben.

Deshalb sind zur "Abdeckung" des üblicherweise benötigten Wirkungsbereichs eine Mehrzahl von sogenannten Basiskurven berechnet worden. Damit ist gemeint, daß eine bestimmte Zahl von unterschiedlichen progressiven Flächen berechnet worden ist, die sich hinsichtlich des sogenannten Flächenbrechwerts im Fernbezugspunkt und der Addition - zumeist definiert als die Differenz des Flächenbrechwerts zwischen dem Fernbezugspunkt und dem Nahbezugspunkt - unterscheiden. Diese progressiven Flächen werden mit unterschiedlichen konkaven augenseitigen Flächen kombiniert, so daß das Brillenglas im Fernbezugspunkt und im Nahbezugspunkt die verordnete Wirkung hat. Anders ausgedrückt, wird mit einer Basiskurve immer ein bestimmter Wirkungsbereich von mehreren Dioptrien "abgedeckt".

In den einleitend genannten Artikeln, die in der DOZ 8/96, S. 44-46 bzw. der NOJ 11/97, S. 18 ff erschienen sind, ist alternativ vorgeschlagen worden, eine Individualisierung dadurch zu erzielen, daß ausgehend von einer standardisierten progressiven Fläche, d. h. ausgehend von progressiven Flächen in der "herkömmlichen Basiskurven-Abstufung" die Individualisierung dadurch erhalten wird, daß die progressiven Flächen mit individuell berechneten asphärischen Flächen als augenseitigen Flächen kombiniert werden.

Die DE-A-197 01 312 gibt letztlich die gleiche Lehre wie die DE-A-43 37 36 oder die US-PS 2 878 721:

Um die progressive Fläche in herkömmlicher Weise in den Rezeptglas-Fertigungen fertigen zu können, wird die augenseitige Fläche als progressive Fläche ausgebildet. Als Vorderfläche wird eine sphärische oder asphärische Fläche verwendet, deren Brechwert im Flächenscheitel entsprechend den üblicherweise verwendeten Basiskurven vergleichsweise "grob" abgestuft ist.

Allen aus den vorstehend genannten Druckschriften bekannten progressiven Brillengläsern ist gemeinsam, daß für einen bestimmten "Rezeptwert" immer eine ganz bestimmte Paarung von Vorderfläche und augenseitiger Fläche verwendet wird. Anders ausgedrückt, wird eine bestimmte Fernteil-Wirkung immer durch jeweils einen Flächenbrechwert der Vorderfläche und der augenseitigen Fläche realisiert.

Die DE 197 01 312 A1 offenbart ein Verfahren zum Herstellen von progressiven Brillengläsern, bei dem zunächst eine Serie von Rohlingen mit grob gestuften Standard-Vorderseiten hergestellt wird. Die Vorderseiten der Brillengläser weisen dabei eine sphärische oder einfache rotationssymmetrische asphärische Fläche auf. Die Rückseite ist eine individuell optimierte, multifokale Rezeptfläche, die die dioptrischen Korrekturanforderungen hinsichtlich sphärischer, astigmatischer und prismatischer Wirkung für die jeweils rezeptierte Gebrauchsbedingung erfüllt. Sämtliche individuellen Korrekturanforderungen werden ausschließlich durch die spezielle Optimierung der Rückseite berücksichtigt. Als Randbedingung für diese spezielle Optimierung fließen dabei neben individuellen dioptrischen Werten für Fern und Nahpunkt des linken und rechten Auges beispielsweise auch der Hornhautscheitelabstand oder eine unterschiedliche geforderte Eigenvergrößerung für das linke und das rechte Auge ein. Die dabei zwangsweise auftretenden Abbildungsfehler werden bei der Optimierung der Rezeptfläche durch deren geeignete Verteilung über die gesamte Rückseite des Glases minimiert.

Bei der Berechnung der einzelnen progressiven Flächen, die als Basiskurven bzw. Basisflächen dienen, sind dabei häufig auftretende Werte für die einzelnen Einflußgrößen, wie Pupillenabstand (PD), Hornhaut/Scheitelabstand (HSA), Konvergenz der Augen bei einer Blicksenkung längs der sogenannten Hauptblicklinie gegebenenfalls als Funktion der Addition, Vorneigung, Prisma etc. unterstellt worden. Dies bedeutet nichts anderes, als daß in der Vergangenheit "individualisierte" Brillengläser für einen "fiktiven Durchschnittsbrillenträger" berechnet worden sind, wobei davon ausgegangen worden ist, daß diese Brillengläser den meisten Anforderungen auch dann genügen, wenn abweichende Einflußgrößen vorliegen.

In den letzten Jahren sind jedoch große Fortschritte sowohl bei der Geschwindigkeit der Optimierung einer progressiven Fläche als auch bei der Fertigungstechnik erzielt worden, so daß es nunmehr auch zu vertretbaren Herstellkosten möglich geworden ist, individualisierte Brillengläser zu berechnen und zu fertigen:

Bereits in der US-PS 2 878 721 ist vorgeschlagen worden, eine progressive Fläche zu berechnen, die auch die astigmatische Wirkung gemäß dem jeweiligen Rezept aufweist. Folgerichtig ist gemäß dieser Druckschrift die progressive Fläche die augenseitige Fläche.

In der DE-A-43 37 36 ist ebenfalls eine individualisierte progressive Fläche vorgeschlagen worden. Insbesondere kann diese progressive Fläche eine astigmatische Wirkung haben, die bzgl. Betrag und Achslage den jeweiligen Rezeptdaten angepaßt ist. Die progressive Fläche kann dabei die Vorderfläche oder die augenseitige Fläche sein.

## Darstellung der Erfindung

Erfindungsgemäß ist nun erkannt worden, daß es insbesondere dann, wenn eine individualisierte progressive Fläche mit einer sphärischen oder asphärischen Vorderfläche kombiniert wird, die entsprechend den üblichen "Basiskurven" vergleichsweise grob abgestuft sind, nicht möglich ist, den verschiedenen Anforderungen zu genügen, die aus den physiologischen Besonderheiten der einzelnen Brillenträger bzw. den jeweiligen Gebrauchsbedingungen resultieren.

Andererseits erfordert die Verwendung von zwei progressiven Flächen, mit denen eine Reihe der Nachteile der aus den vorstehend genannten Artikeln bzw. Druckschriften bekannten progressiven Brillengläser überwunden werden könnten, einen auch beim derzeitigen Stand der Computer- und Fertigungstechnik immer noch zu hohen (teuren) Aufwand.

Der Erfindung liegt die Aufgabe zugrunde, ein Verfahren zur Herstellung von progressiven Brillengläsern, von denen jedes entsprechend den individuellen Daten eines bestimmten Brillenträgers gefertigt ist, anzugeben, das auch bei Verwendung nur einer individualisierten progressiven Fläche leicht an die jeweiligen physiologischen Anforderungen des jeweiligen Brillenträgers angepaßt werden kann.

Eine erfindungsgemäße Lösung dieser Aufgabe ist im Patentanspruch 1 angegebenen. Weiterbildungen der Erfindung sind Gegenstand der Ansprüche 2 folgende.

Erfindungsgemäß wird von progressiven Brillengläsern ausgegangen, denen jedes

- eine erste Fläche mit einem bestimmten Flächenbrechwert ($D_1$) im Flächenscheitel, und
- eine asphärische zweite Fläche (Rezeptfläche) aufweist, deren Flächenbrechwert ($D_2$) sich längs einer Linie (i.f. als Hauptlinie bezeichnet), die zumindest in etwa der Hauptblicklinie bei einer Blicksenkung folgt, derart ändert,
- daß das Brillenglas in einem ersten Bezugspunkt ($B_F$) eine erste Wirkung ($D_f$) hat, die zum Blicken in eine beim jeweiligen Anwendungsfall vorgesehene erste Entfernung geeignet ist, und
- daß sich diese Wirkung längs der Hauptlinie um einen vorgegebenen Wert (Addition Add) auf einen in einem zweiten Bezugspunkt vorliegenden zweiten Wert ($D_n$) ändert, der zum Blicken in eine für den jeweiligen Anwendungsfall vorgesehene zweite Entfernung geeignet ist, und

dessen zweite Fläche gegebenenfalls einen optional zum Teil zum Ausgleich eines Augenastimatismus und/oder Astigmatismus schiefer Bündel geeigneten Flächenastigmatismus aufweist.

Das erfindungsgemäße Verfahren zeichnet sich durch folgende Fertigungsschritte aus:

- zunächst werden Brillenglasrohlinge (Blanks) mit fertiger erster Fläche in einer bestimmten, - insbesondere - vergleichsweise engen Abstufung des Flächenbrechwerts ($D_1$) hergestellt,
- ausgehend von den individuellen Daten, nämlich zumindest der jeweils benötigten ersten Wirkung $D_f$, der Addition Add und gegebenenfalls dem Wert und der Achslage des Augenastigmatismus des Brillenträgers, für den das jeweilige Brillenglas bestimmt ist, wird aufgrund weiterer Design-Daten davon mindestens der individuelle Hornhant/scheitel abstand eine erste Fläche mit einem bestimmten Flächenbrechwert $D_1$ (der eventuell nur im Scheitel vorliegt) ausgewählt und die zweite Fläche derart berechnet, daß der im ersten Bezugspunkt benötigte Flächenbrechwert $D_{2f}$ der zweiten Fläche entsprechend dem jeweils gewählten Flächenbrechwert $D_1$ der ersten Fläche eingestellt ist, so daß sich in Abhängigkeit von den jeweiligen Design-Daten für ein- und dieselbe erste Wirkung $D_f$ und ein- und dieselbe Addition Add sowie gegebenenfalls ein- und denselben Wert und Achslage des Augenastigmatismus unterschiedliche Paarungen von ersten Flächen, die sich zumindest hinsichtlich des Flächenbrechwertes $D_1$ unterscheiden, und von zugeordneten, jeweils individuell berechneten zweiten Flächen ergeben.

Die Erfindung bricht damit mit der in der Vergangenheit in der Brillenoptik geltenden "Grundregel", für eine bestimmte Wirkung und eine bestimmte "Designfamilie" immer nur eine einzige Paarung von Vorderfläche und augenseitiger Fläche anzubieten. Durch die erfindungsgemäße Vorgehensweise, diese einzige Paarung aufzuheben, erhält man wesentlich mehr Freiheitsgrade bei der Optimierung der progressiven Fläche und kann so überraschender Weise - auch bei vergleichsweise einfach gestalteten Vorderflächen - Brillengläser bzw. Brillenlinsen berechnen, die an bestimmte individuelle Eigenschaften des jeweiligen Brillenträgers besser angepaßt sind als Gläser, bei denen nur jeweils eine Durchbiegung der Vorderfläche für jede Wirkung gewählt wird.

Besonders bevorzugt ist es, die Auswahl der ersten Fläche in Abhängigkeit von dem jeweiligen (individuellen) Hornhaut/Scheitel-Abstand zu treffen.

Für die Design-Daten, die für die Auswahl der ersten Fläche mit dem Flächenbrechwert $D_1$ im Scheitel herangezogen werden, können in Abhängigkeit von der jeweiligen Gewichtung weiterhin folgende Gesichtspunkte herangezogen werden:

| | |
|---|---|
| Kosmetische Eigenschaften: | Augenvergrößerung, Durchbiegung, Wimperanschlag an der augenseitigen Fläche, |
| Geometrische Eigenschaften: | Gewicht, Bauhöhe, Dicke, Fassungsform, |
| Optische Eigenschaften: | Reflexionen, Abbildungsgüte |

Erfindungsgemäß eine besonders wesentliche Größe für die Wahl der Durchbiegung der vorderen Fläche ist jedoch der Hornhaut/Scheitel-Abstand, da dieser sowohl für die in Wimpernanschlag als auch für die Abbildungsqualität von entscheidender Bedeutung ist.

Ferner ist es möglich, bei den Design-Daten und zusätzlich bei der Gestaltung der progressiven Rezeptfläche weitere individuelle Daten des jeweiligen Brillenträgers zu berücksichtigen.

Diese weiteren individuellen Daten können sein

- Pupillenabstand,
- Augenlänge
- Vorneigung und Durchmuschelung
- Längen- bzw. Brechwertametropie
- Vertikal und/oder Horizontalprismen sowie deren Aufteilung rechts/links,
- Größe und/oder die Form der gewählten Fassung,
- Zentrierhöhe,
- Pupillendurchmesser und/oder Vorneigung der Gläser.

Insbesondere kann als erste Fläche eine sphärische oder eine rotationssymmetrische asphärische Fläche gewählt werden.

Ferner ist es auch möglich, daß als erste Fläche eine Fläche gewählt wird, deren Hauptschnitte unterschiedlich gestaltet sind. Dabei kann die erste Fläche teilweise oder vollständig zum Ausgleich eines Augenastimatismus und/oder Astigmatismus schiefer Bündel geeigneten Flächenastigmatismus beitragen. Ausdrücklich soll jedoch darauf hingewiesen werden, daß eine erste Fläche mit unterschiedlichen Hauptschnitten nicht notwendigerweise dann gewählt wird, wenn ein Augenastigmatismus und/oder Astigmatismus schiefer Bündel ausgeglichen werden soll. Eine Fläche mit unterschiedlichen Hauptschnitten kann auch völlig unabhängig von irgendwelchen Astigmatismuswerten gewählt werden.

Insbesondere kann die erste Fläche aus kosmetischen Gründen in Horizontalrichtung stärker als in Vertikalrichtung durchgebogen sein. Dies ist insbesondere dann vorteilhaft, wenn die Brillenfassung, in die die Gläser eingesetzt werden sollen, wesentlich breiter als hoch ist.

Besonders bevorzugt - jedoch nicht zwingend - ist es, daß die erste Fläche die Vorderfläche ist. Damit können für die Herstellung der individuellen progressiven Fläche die Maschinen eingesetzt werden, wie sie üblicherweise im sogenannten Rezeptglas-Fertigungsbetrieben für die Herstellung der konkaven Fläche vorhanden sind.

Der Flächenbrechwert $D_1$ der ersten Fläche im Scheitel kann zwischen 0 dpt und 15 dpt gewählt werden.

Die Berechnung der progressiven Flächen kann dabei mit den in der Brillenoptik üblichen Verfahren erfolgen, so daß an dieser Stelle nicht näher hierauf eingegangen werden muß. Insbesondere kann die Berechnung mit Zielfunktionen durchgeführt werden. Dabei können bei der Berechnung der Rezeptfläche der Ausgangsvisus, Modelle für die Augenbewegung und/oder Abbildungsfehler höherer Ordnung berücksichtigt werden.

Weiterhin können bei der Berechnung der Rezeptflächen Anisometropien berücksichtigt werden.

Besonders bevorzugt ist es, wenn die Flächenbrechwerts im Scheitel der insgesamt eingesetzten ersten Flächen nicht grob, sondern in einem Raster von 0,25 dpt abgestuft sind, wobei auch eine Abstufung in Schritten von 0,5 dpt noch sehr gute Ergebnisse liefert.

Bei der Eingabe der individuellen Daten in das Optimierungsprogramms, mit dem die progressive Rezeptfläche berechnet wird, ist es besonders bevorzugt, wenn die individuellen Daten des jeweiligen Brillenträgers sowie das Flächendesign mit einem bestimmten Raster für die Auswahl der jeweiligen Vorderfläche und der augenseitigen Fläche abgestuft werden. Die Abstufung kann dabei unter Berücksichtigung der Möglichkeiten des Augenoptikers, diese Werte zu messen, vorgenommen werden. Beispielsweise kann das Raster betragen:

| | |
|---|---|
| für die Fernteil- und Nahteilwirkung: | 0,125dpt |
| für den Pupillenabstand: | 0,5 mm |
| für den Wert des Augenastigmatismus | 0,125 dpt |
| für die Achslage | 2,5° |
| für die Vorneigung / Durchmuschelung | 0,5° |
| für den Augendrehpunktsabstand | 0,5 mm |
| für das Prisma | 0,125 cm/m |

Ausdrücklich soll jedoch darauf hingewiesen werden, daß das vorstehend genannte Raster in keinster Weise beschränkend für die Erfindung ist. Selbstverständlich können auch andere Raster für einen Teil der Werte oder alle Werte verwendet werden.

Weiter ist es möglich, bestimmte unterschiedliche Flächendesigns für verschiedene Anwendungen vorzugeben. Dies kann beispielsweise doch Vorgabe einer Startfläche, von der bei der Optimierung ausgegangen wird, erfolgen. Derartige Anwendungen können sein:

- Standard (ausgewogen hinsichtlich Fernteil, Nahteil und Progressionszone)
- Bildschirmarbeitsplatz (mittlere Entfernungen bevorzugt)
- Schreibtischarbeit (kleine Entfernungen bevorzugt)
- Autofahrer (asymmetrisches Design, große Entfernungen bevorzugt)
- Pilot (Nahteil oben und unten)
- Sport und insbesondere Ballsportarten mit einem Schläger (unendlich bis ca. 1 m bevorzugt)
- Uhrmacher (sehr kurze Entfernungen)
- Chirurg (im wesentlichen mittlere Entfernungen).

Ausdrücklich soll darauf hingewiesen werden, daß die vorstehende Aufzählung von Flächendesigns keinesfalls abschließend ist ; vielmehr können die verschiedensten nicht erwähnten Designs im Rahmen der Erfindung gewählt werden.

Weiter ist es bei dem erfindungsgemäßen Verfahren möglich, daß die Lage und Größe der einzelnen Sehbereiche verordnungsabhängig ist. Insbesondere können die Lage und Größe der einzelnen Sehbereiche für Hyperope und Myope unterschiedlich sein.

In die erfindungsgemäße Berechnung Rezeptfläche können weitere Daten einbezogen werden:

So ist es möglich, daß der vertikale Abstand, der funktionelle Verlauf des Brechwerts und eines gegebenenfalls vorgesehenen Insets zwischen Fern- und Nahbezugspunkt unter physiologischen und/oder anwendungsspezifischen und/oder fassungsspezifischen Gesichtspunkten gewählt wird. Auch kann die Form der Fassung in das Design mit einbezogen werden. Es ist sogar möglich, die Haltung des Brillenträgers und seine Sehgewohnheiten in das Design mit einzubeziehen.

Die augenseitige Fläche, die bevorzugt die progressive Fläche ist, muß keine konkave Fläche im strengen Sinne sein. Unter Umständen ist es denkbar, daß der Flächenbrechwert (und/oder Linien-Brechwerte) der Rezeptfläche an wenigstens einer Stelle den Wert 0 dpt annimmt, oder sogar das Vorzeichen wechselt.

Dabei ist es insbesondere möglich, daß die Stelle, an der der Wert 0 dpt erreicht wird, bzw. das Vorzeichen wechselt, in der Nähe der Hauptlinie liegt.

Das erfindungsgemäße Verfahren zur Herstellung von progressiven Brillengläsern erfordert nicht, daß jedes individuelle Brillenglas in allen Schritten neue berechnet wird. Vielmehr ist es möglich, daß Paarungen zwischen bestimmten Vorderflächen und augenseitigen Flächen für die verschiedenen Flächendesigns und jeweils typische, häufig vorkommende anwenderspezifische Daten in einer Datenbank abgelegt sind, aus der sie bei einem Bestelleingang abgerufen werden, und daß lediglich für weniger häufig vorkommende Kombinationen die Flächenpaarungen und die Daten der augenseitigen Fläche beim Bestelleingang berechnet werden.

In dieser Datenbank können zusätzlich empirisch ermittelte Informationen über die Verträglichkeit abgelegt sein, aufgrund derer unter verschiedenen, aufgrund des jeweils verwendeten Optimierungsprogramms möglichen Flächenkombinationen und/oder Flächenausbildungen ausgewählt wird. Anders ausgedrückt, kann das erfindungsgemäße Verfahren mit einem "selbstlernenden" Optimierungsverfahren ausgeführt werden.

In jedem Falle ist es bevorzugt, wenn die Brillenglasrohlinge (Blanks), die mit fertiger erster Fläche in einer bestimmten, vergleichsweise engen Abstufung des Flächenbrechwerts ($D_1$) hergestellt werden, lagermäßig vorgehalten werden.

## Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen hinsichtlich der Offenbarung aller im Text nicht näher erläuterten erfindungsgemäßen Einzelheiten ausdrücklich verwiesen wird. Es zeigen:

Fig. 1a - 4a      die Pfeilhöhen von vier Ausführungsbeispielen der Erfindung,

Fig. 1b - 4b      die Isolinien der astigmatischen Abweichung,

Fig. 1c - 4c      die Isolinien des mittleren Gebrauchswerts,

Fig. 1d - 4d      die Isolinien des Flächenastigmatismus, und

Fig. 1e - 4e      die Isolinien der mittleren Flächenbrechkraft für diese Ausführungsbeispiele.

## Beschreibung von Ausführungsbeispielen

Bei allen vier dargestellten Ausführungsbeispielen ist die progressive Fläche ohne Beschränkung der Allgemeinheit die augenseitige Fläche. Bei der Vorderfläche handelt es sich um eine sphärische oder torische Fläche mit sphärischen Hauptschnitten. Selbstverständlich kann aber auch als Vorderfläche eine asphärische oder eine atorische Fläche - jeweils im allgemeinen Sinne - verwendet werden.

Allen vier Ausführungsbeispielen ist gemeinsam, daß sie im Fernbezugspunkt eine sphärische Wirkung (mittlerer Gebrauchswert) von -1 dpt und eine Addition von 2 dpt haben. Die Addition ist dabei nicht über die Flächendaten, sondern als die Differenz der mittleren Gebrauchswerte im Fernbezugspunkt und im Nahbezugspunkt definiert. Eine astigmatische Verordnung ist nicht vorgesehen. Anders ausgedrückt, die üblicherweise in einem Brillenrezept angegebenen Rezeptdaten sind für alle vier Ausführungsbeispiele gleich.

In allen Figuren ist die Abszisse (x-Achse) die horizontale Achse und der Ordinate (y-Achse) die vertikale Achse in der Gebrauchsstellung der jeweiligen Fläche, d.h. in dem Zustand, in dem das Brillenglas bzw. die Brillenlinse vor dem Auge angeordnet ist.

Der Fern- und der Nahbezugspunkt sind in den jeweiligen Figuren b-e jeweils mit Kreisen dargestellt, der Zentrierpunkt ist mit einem Kreuz bezeichnet - ihre Lage ist den jeweiligen Figuren zu entnehmen. Weiterhin ist der Verlauf der Hauptlinie, wie er erfindungsgemäß festgelegt bzw. ermittelt worden ist, eingezeichnet. Zusätzlich ist in den Figuren b-e die Form einer typischen Brillenfassung, also die Form eines gerandeten Brillenglases dargestellt. Selbstverständlich können auch andere Formen im Rahmen der Erfindung verwendet werden. Die dargestellte Form dient nur zur Erläuterung des Einflusses der Randung auf die Form eines rohrunden Brillenglases bzw. einer Brillenlinse, bzw. zur Erläuterung des Relevanz der einzelnen Bildfehler für den tatsächlich in einer Fassung benutzten Bereich eines progressiven Brillenglases.

Die Teilfiguren a geben die Pfeilhöhen der progressiven augenseitigen Fläche innerhalb eines Kreises mit einem Radius von 20 mm um den Koordinatenursprung für die jeweiligen Ausführungsbeispiele an. Unter Pfeilhöhe versteht man den Abstand in z-Richtung eines Punktes mit den Koordinaten x und y (horizontale bzw. vertikale Achse in der Gebrauchsstellung des Brillenglases) von der Tangentialebene des Flächenscheitels, also in Richtung der Flächennormale. Aufgrund des erfindungsgemäß gewählten Berechnungs- und Darstellungsverfahrens liegt der Flächenscheitel nicht notwendigerweise im Koordinatenursprung des kartesischen Koordinatensystems.

In den Tabellen sind jeweils in der linken Spalte die y-Werte (von -20 bis +20 mm) und in der obersten Zeile ab der Spalte 2 folgende die x-Werte (von -20 bis + 20mm) aufgetragen. Aus darstellungstechnischen Gründen ist die jede Pfeilhöhen-Tabelle zweigeteilt. Die Pfeilhöhen der einzelnen Punkte sind ebenfalls in Millimeter angeben. Für Punkte außerhalb des Kreises mit einem Radius von 20 mm um den Koordinatenursprung ist der Pfeilhöhen-Wert Null angegeben; dies bedeutet jedoch nicht, daß die Pfeilhöhen dieser Punkte den Wert 0 haben.

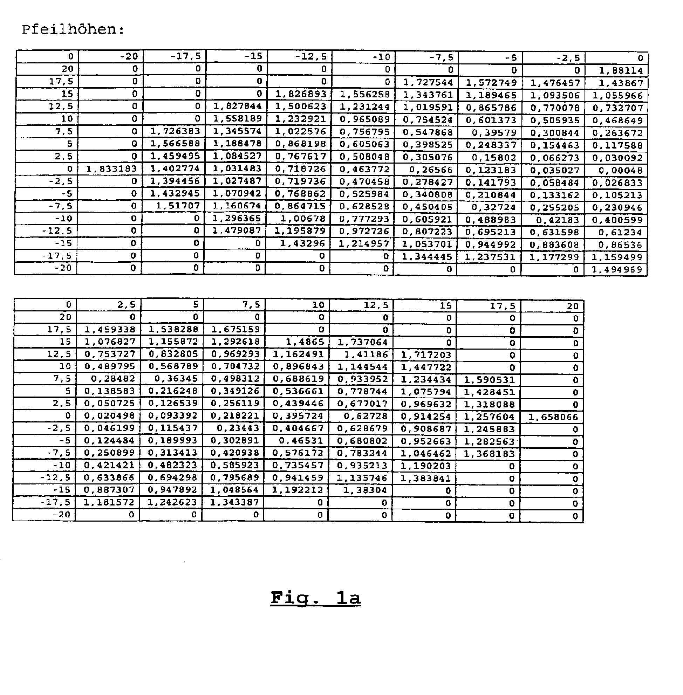

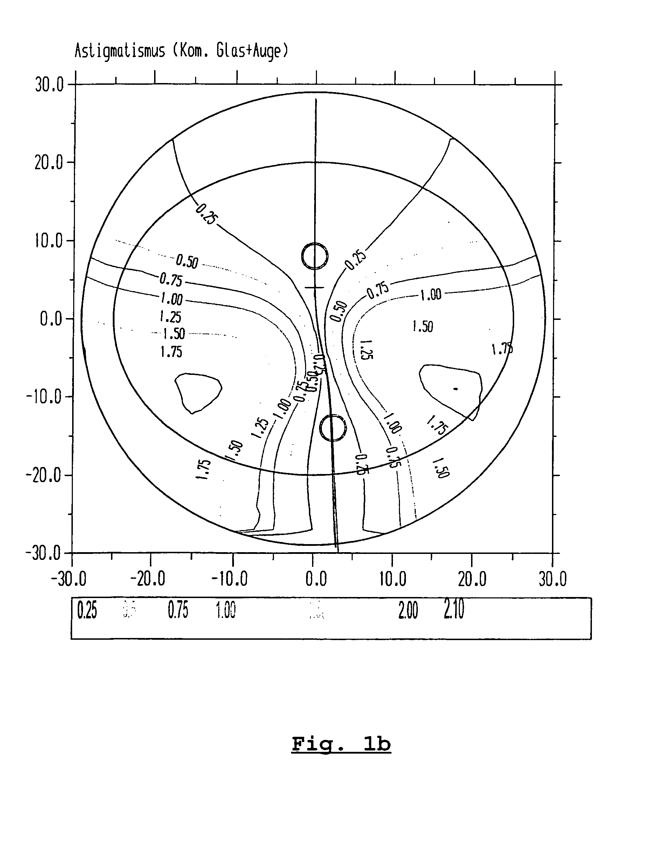

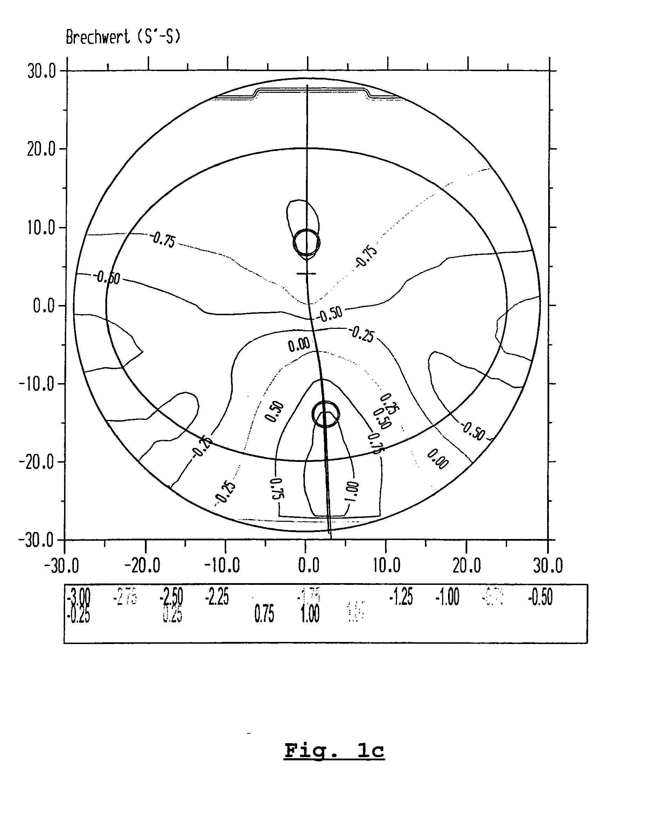

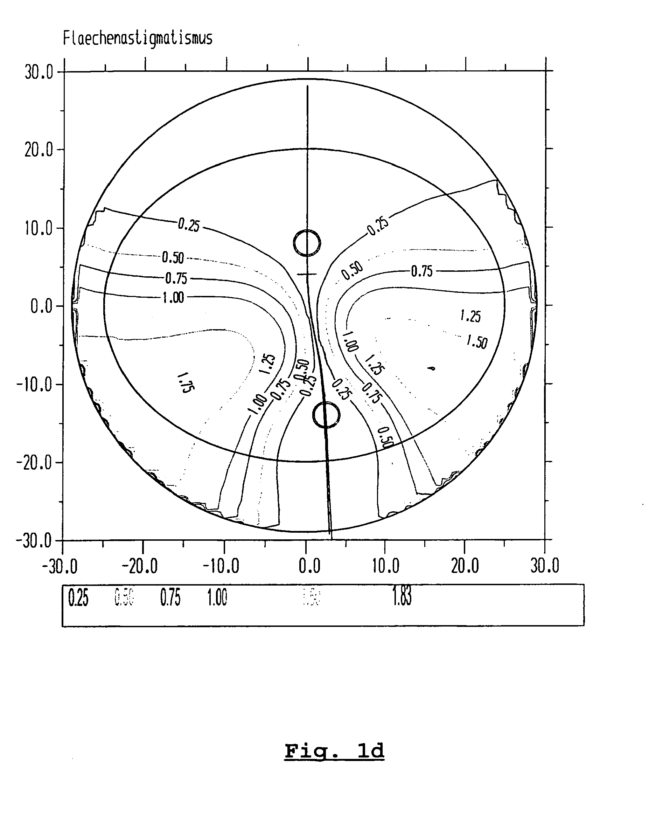

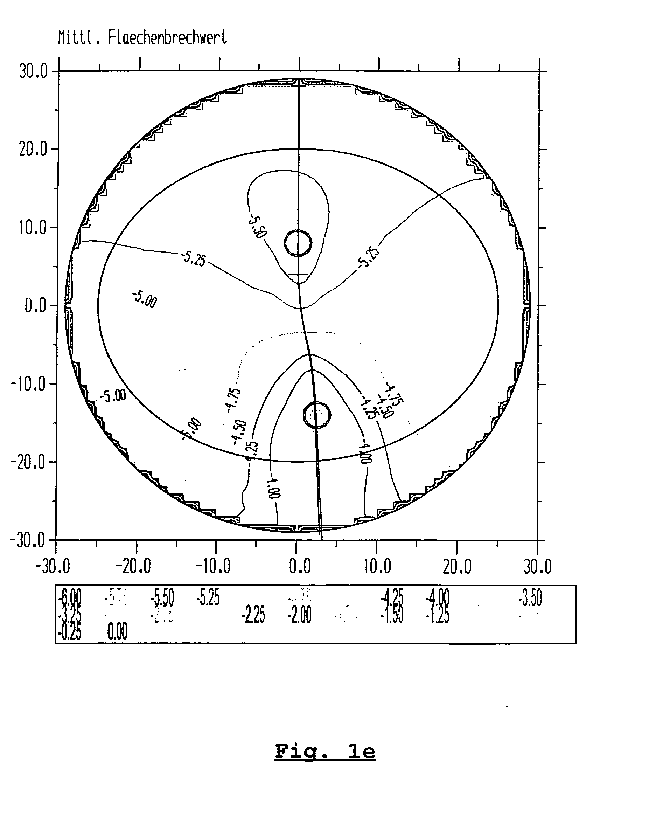

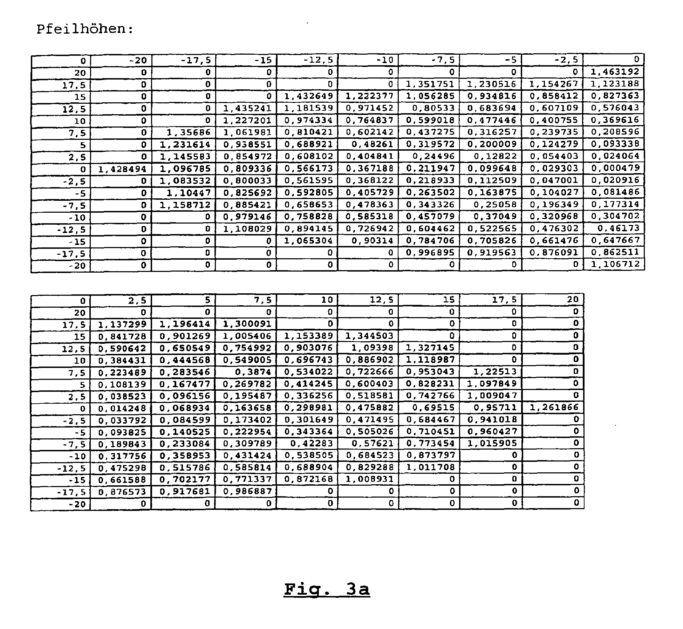

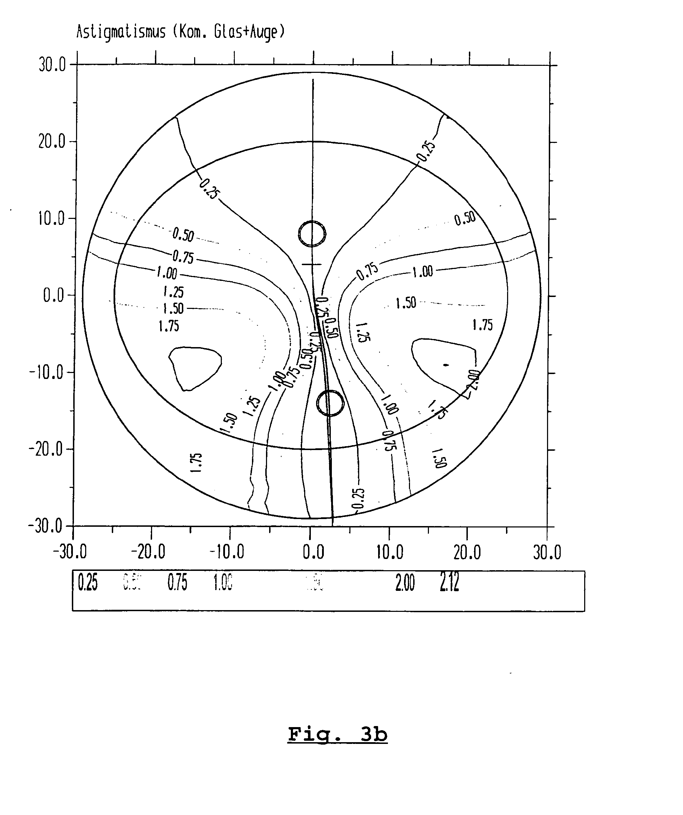

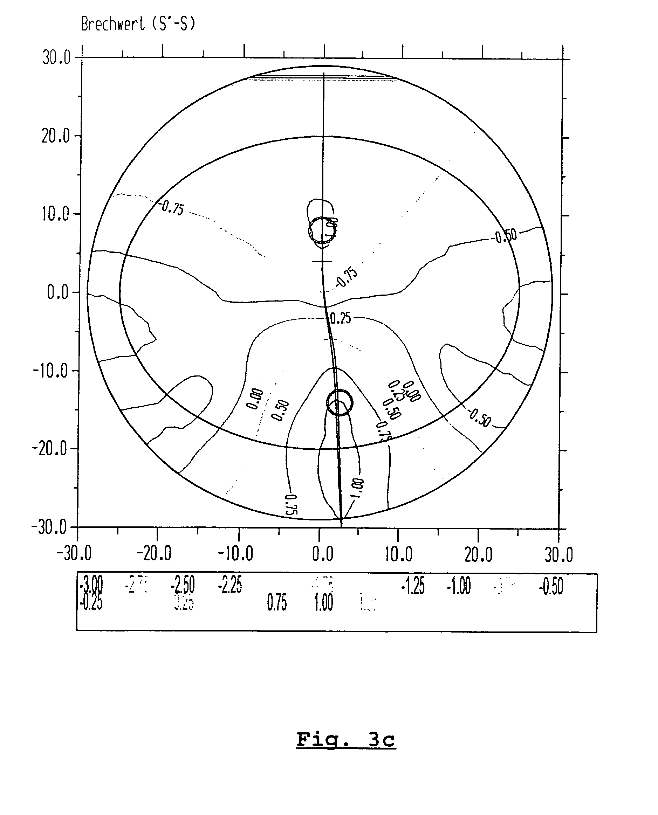

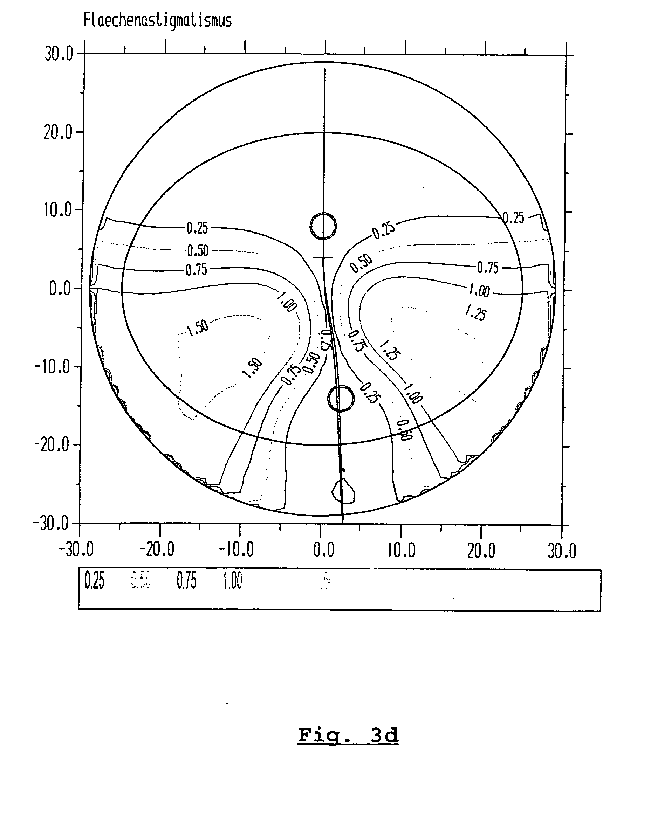

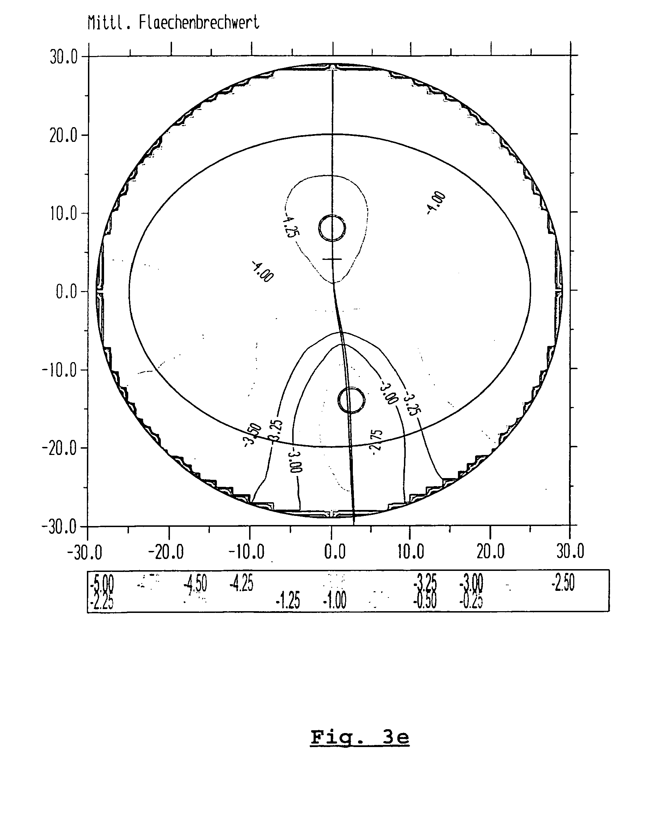

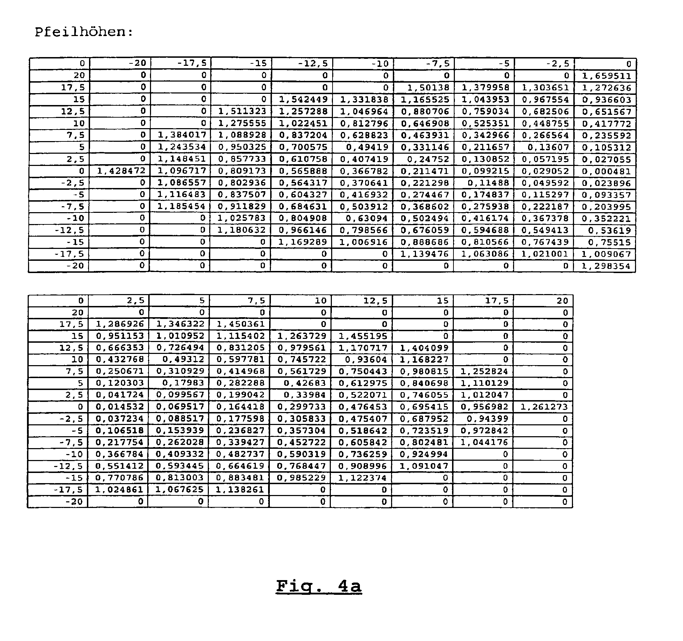

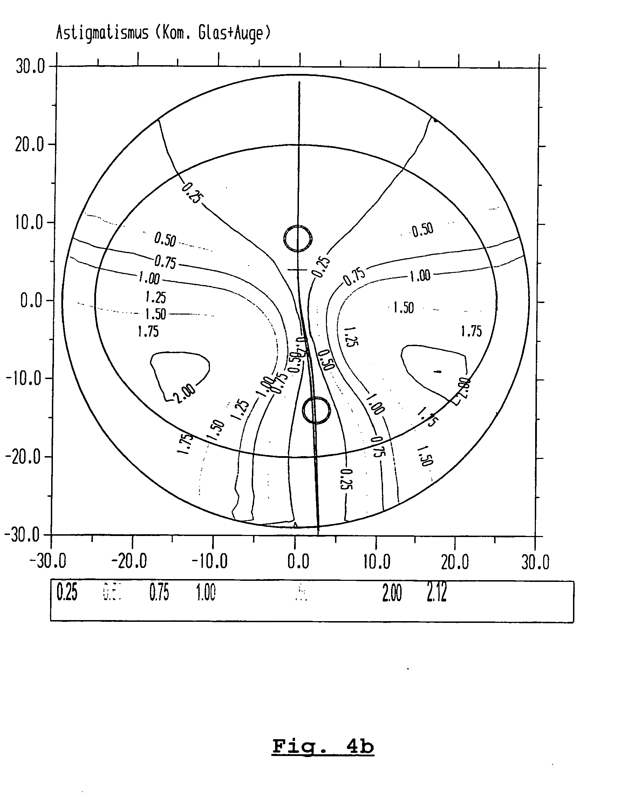

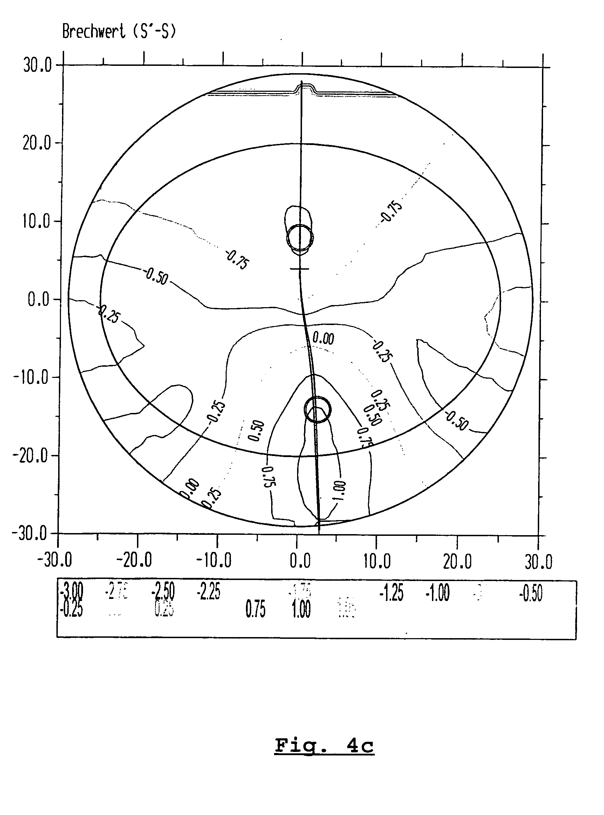

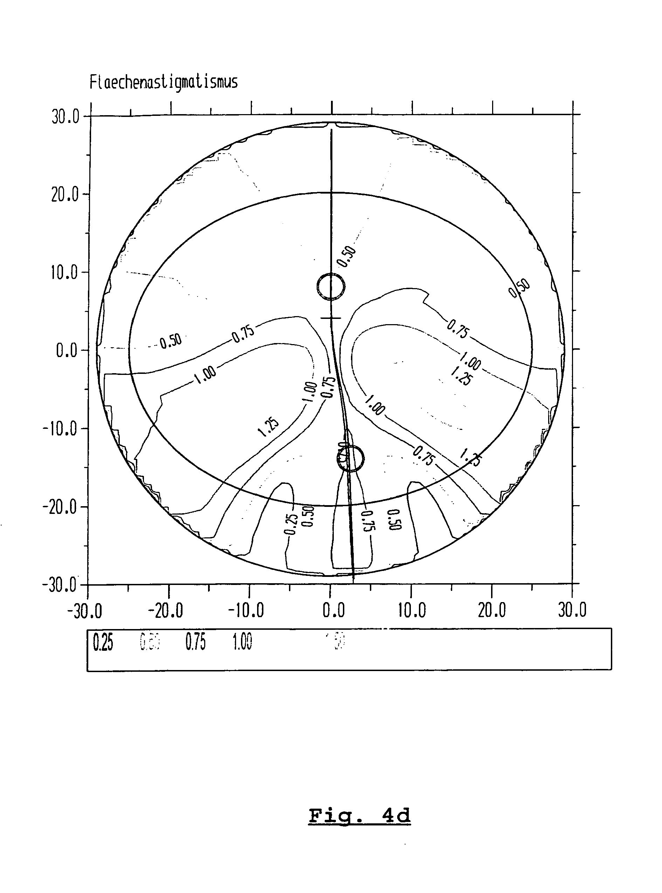

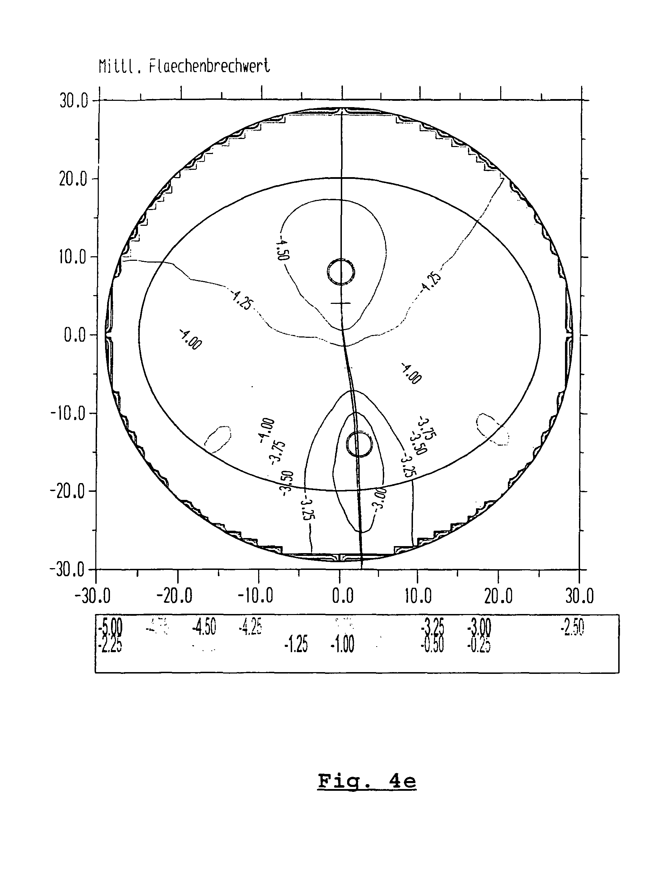

Die Teilfiguren b der Figuren 1 bis 4 zeigen die astigmatische Abweichung innerhalb eines Kreises mit dem Radius 30 mm um den Koordinatenursprung, der bei allen Ausführungsbeispielen 4 mm unterhalb des sogenannten Zentrierkreuzes liegt. Die astigmatische Abweichung ist der "Rest-Astigmatismus" des Systems Brillenglas/Auge und ist mittels sogenannter Isolinien beginnend mit der Isolinie 0,25 dpt dargestellt. Die Isolinien geben die Abweichung des Astigmatismus bzgl. Betrag und Achslage von der zylindrischen Verordnung - bei den gewählten Ausführungsbeispielen, also im Falle eines astigmatismusfreien Auges 0 dpt - an.

Die Teilfiguren c zeigen entsprechend die Isolinien für den mittleren Gebrauchswert dieser Ausführungsbeispiele der Erfindung. Der mittlere Gebrauchswert D ist der Mittelwert der Kehrwerte der bildseitigen Schnittweiten S'1 und S'2 minus der Objektentfernung, also der objektseitigen Schnittweite S

$$D = 0,5 * (S'1 + S'2) - S$$

und ist ebenfalls in Form sogenannter Isolinien beginnend mit der Isolinie -0,75 dpt dargestellt. (Im Fernbezugspunkt haben die erfindungsgemäßen Ausführungsbeispiele den mittleren Gebrauchswert -1 dpt.)

Entsprechend sind in den Teilfiguren d und e die Isolinien der Flächenwerte, nämlich der Flächenastigmatismus und der mittlere Flächenbrechwert dargestellt. Zur Definition dieser Flächenwerte wird auf die einleitend genannte US-PS 2 878 721 verwiesen.

Die vier Ausführungsbeispiele haben zwar alle die gleichen Rezeptdaten (mittlerer Gebrauchswert im Fernbezugspunkt - 1 dpt, Addition 2 dpt), sie unterscheiden sich jedoch hinsichtlich ihrer individualisierten Gebrauchsbedingungen. In der nachfolgenden Tabelle sind diese Gebrauchsbedingungen sowie die Daten der jeweils verwendeten Vorderfläche angegeben:

| Beispiel | 1 | 2 | 3 | 4 |
|---|---|---|---|---|
| DIx | 4,55 | 4,55 | 3,41 | 3,41 |
| DIy | 4,55 | 4,55 | 3,41 | 3,98 |
| N | 1,597 | 1,597 | 1,597 | 1,597 |
| D | 1,59 | 1,59 | 1,59 | 1,59 |
| DRP | 1,0 | 1,0 | 1,0 | 1,0 |
| PD | 63 | 71 | 63 | 63 |
| HSA | 15 | 15 | 10 | 10 |
| Vorneigung | 0° | 8° | 8° | 8° |

Hierbei bedeuten:

DIx    Brechwert der Vorderfläche in x-Richtung(dpt)
DIy    Brechwert der Vorderfläche in y-Richtung(dpt)
n    Brechungsindex des Glasmaterials
d    Mittendicke der Brillenlinse in mm
DRP    Dickenreduktionsprisma in cm/m
PD    Pupillenabstand in mm
HSA    Hornhaut/Scheitel-Abstand in mm

Vorneigungdes Brillenglases in Grad.

Zur Definition des (Linien)-Brechwertes (DIx bzw. DIy) einer Fläche längs eines Horizontal- bzw. Vertikalschnittes wird auf die bereits genannte US-PS 2 878 721 verwiesen. Zur Definition der weiteren Größen wird z.B. auf augenoptische Lehrbücher verwiesen.

Die Ausführungsbeispiele 1 und 2 unterscheiden sich hinsichtlich ihrer PD: Beim Beispiel 1 beträgt sie 63 mm - ein typischer Wert, wie er häufig für die Berechnung von Standardflächen verwendet wird - , während sie beim Beispiel 2 71 mm - ein vergleichsweise großer Wert - beträgt. Auch die Vorneigung ist unterschiedlich. Da der HSA jedoch bei beiden Beispielen gleich (15 mm) ist, wird bei beiden Beispielen die gleiche Vorderfläche, nämlich eine sphärische Fläche mit einem Flächenbrechwert von 4,55 dpt verwendet.

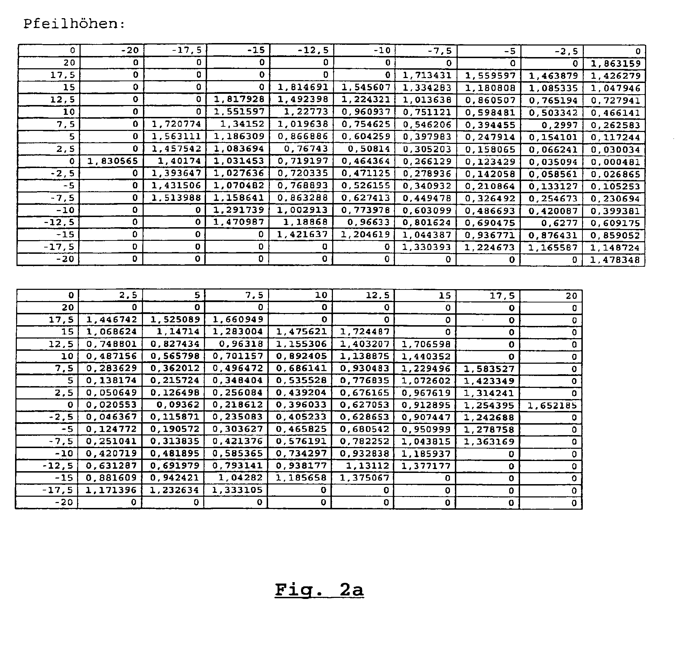

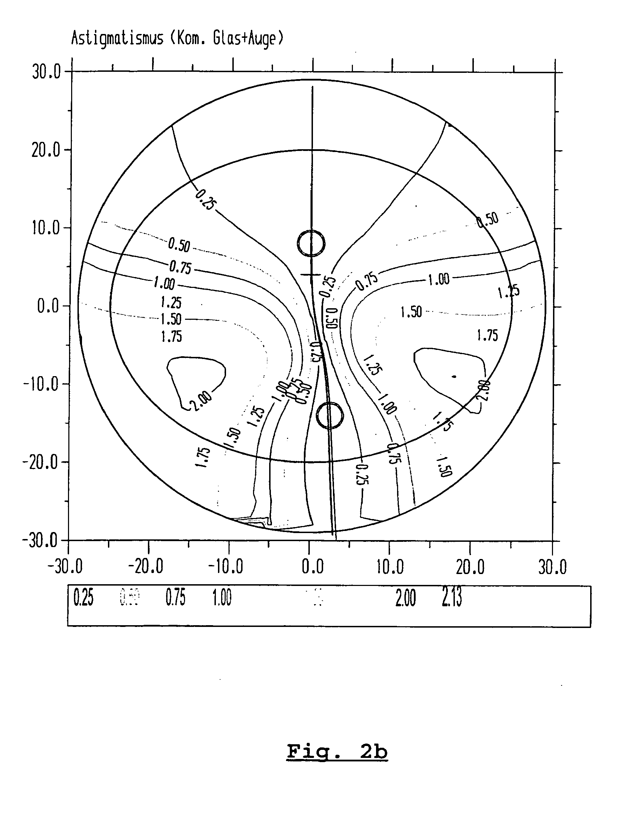

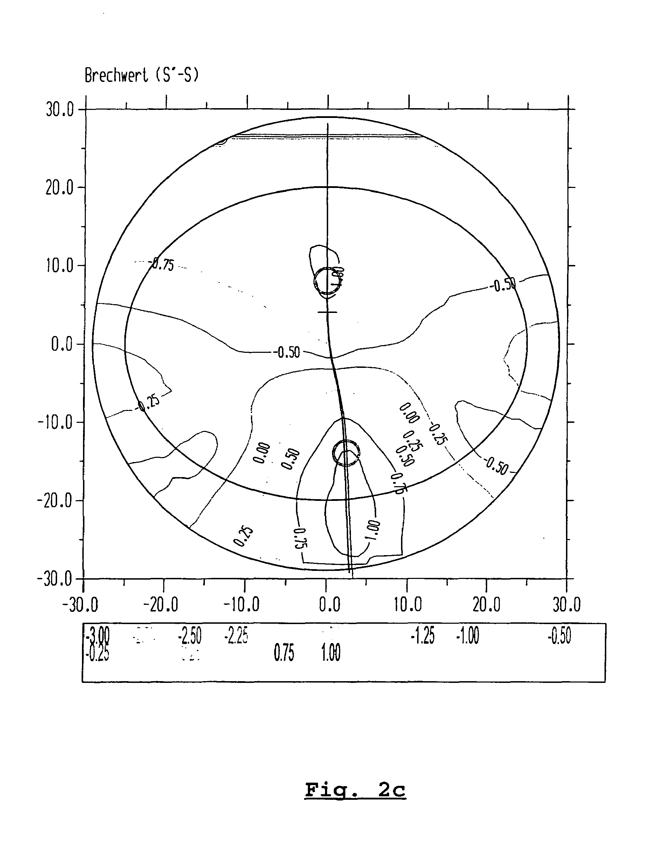

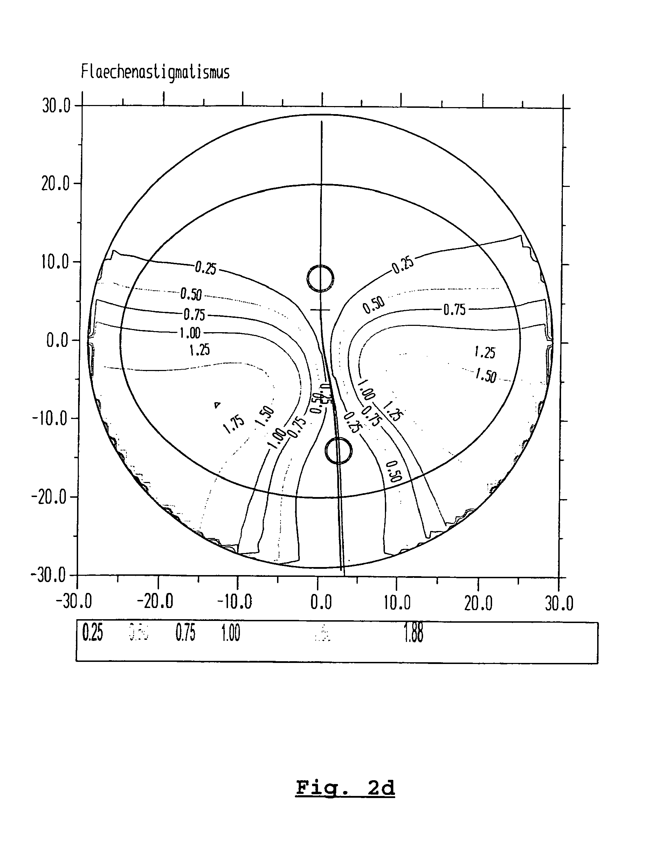

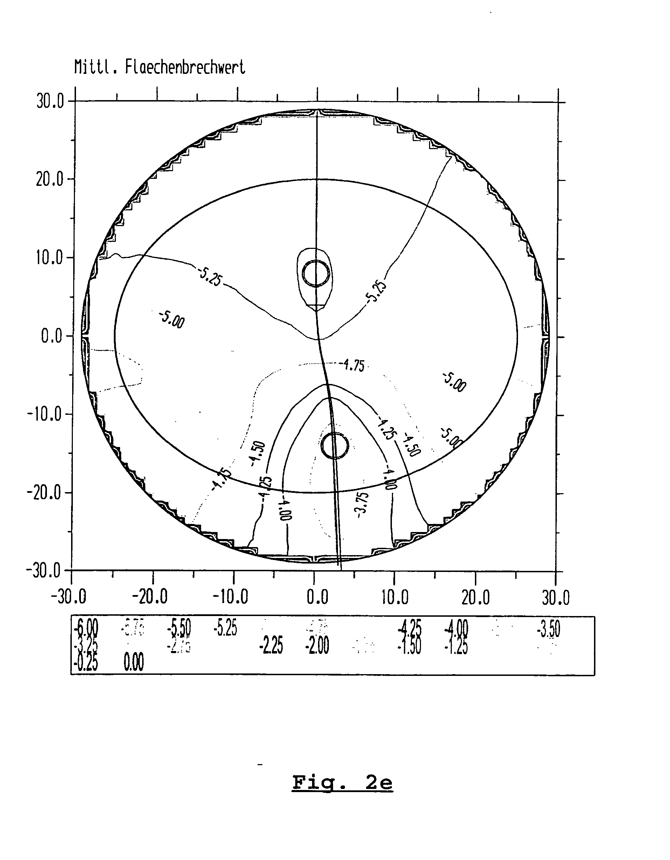

Wie den Fig. 1a und 2a zu entnehmen ist, weisen die Pfeilhöhen der beiden augenseitigen Flächen - trotz der übereinstimmenden Vorderfläche - deutliche Unterschiede auf. Entsprechend unterscheiden sich auch die Flächendaten, nämlich der Flächenastigmatismus und der Flächenbrechwert (Figuren 1d, 1e und 2d, 2e). Dennoch sind die Daten in der Gebrauchsstellung (mittlerer Gebrauchswert und Restastigmatismus) für die beiden Brillengläser praktisch gleich (vgl. Fig. 1b und 1c sowie 2b und 2c).

Die Beispiele 3 und 4 unterscheiden sich von dem Beispiel 1, mit dem sie eine übereinstimmende PD von 63 mm haben, nicht nur in der Vorneigung, sondern auch (und vor allem) im Hornhaut/Scheitel-Abstand (HSA). Bei den Beispielen 3 und 4 beträgt dieser nur 10 mm gegenüber 15 mm beim Beispiel 1. Aufgrund dieses vergleichsweise kleinen Hornhaut/Scheitel-Abstandes ist die Vorderfläche bei den Beispielen 3 und 4 deutlich geringer durchgebogen als bei den Beispielen 1 und 2. Beim Beispiel 3 wird eine sphärische Vorderfläche mit einem Flächenbrechwert von 3,41 dpt verwendet. Beim Beispiel 4 wird eine torische Vorderfläche verwendet, deren Schnitt mit einer horizontalen Ebene ebenfalls einen (Linien)-Brechwert von 3,41 dpt und deren Schnitt mit einer vertikalen Ebene einen (Linien)-Brechwert von 3,98 dpt hat. Die torische Ausgestaltung beim Beispiel 4 ist nicht durch eine astigmatische Verordnung bestimmt, sondern lediglich aus kosmetischen Gründen gewählt worden. Der aufgrund der torischen Ausgestaltung auftretende - eigentlich unerwünschte - Astigmatismus, der durch die Vorderfläche verursacht wird, wird durch eine entsprechende Gestaltung der augenseitigen progressiven Fläche kompensiert. Dementsprechend weist die progressive Fläche des Beispiels 4 Flächenastigmatismus-Werte auf, die sich vollständig von denen der Beispiel 1 bis 3 unterscheiden, da die Flächenastigmatismus-Werte zur Kompensation des "künstlich eingeführten" Flächenastigmatismus der Vorderfläche dienen.

Im übrigen wird zu der Ausgestaltung der vier Ausführungsbeispiele auf die Figuren verwiesen, in denen diese Flächen im einzelnen offenbart und dargestellt sind.

Zusammenfassend kann festgehalten werden, daß sich trotz der individualisierten Gebrauchsbedingungen und des bei dem Beispiel 4 aus kosmetischen Gründen eingeführten Flächenastigmatismus der Vorderfläche die Isolinien in Gebrauchsstellung praktisch nicht unterscheiden, obwohl sich die Flächenwerte z.T. deutlich unterscheiden.

Die vorstehenden Ausführungsbeispiele können nicht dahingehend interpretiert werden, daß die gewählte Vorderfläche und die Gestaltung der augenseitigen progressiven Fläche die Erfindung in irgendeiner Weise einschränken ; ebensowenig kann dies die gewählte Abhängigkeit der Durchbiegung der Vorderfläche von bestimmten individuellen Parametern.

Selbstverständlich können die erfindungsgemäßen Verfahren und Überlegungen auch auf die Berechnung und Herstellung von Brillengläsern mit zwei progressiven Flächen und/oder mit (zusätzlich) variierendem Brechnungsindex übertragen werden.

In jedem Falle erhält man durch die erfindungsgemäße Freiheit bei der Wahl der Vorderfläche anstelle der strengen Paarung zwischen Vorderfläche und augenseitiger Fläche beim Stand der Technik Brillengläser mit überlegenen optischen Eigenschaften.

**Patentansprüche**

1. Verfahren zur Herstellung eines progressiven Brillenglases, das entsprechend den individuellen Daten eines bestimmten Brillenträgers gefertigt ist, und das

- eine erste Fläche mit einem bestimmten Flächenbrechwert ($D_1$) im Flächenscheitel, und
- eine asphärische zweite Fläche (Rezeptfläche) aufweist, deren Flächenbrechwert ($D_2$) sich längs einer Linie (i.f. als Hauptlinie bezeichnet), die zumindest in etwa der Hauptblicklinie bei einer Blicksenkung folgt, derart ändert,
- daß das Brillenglas in einem ersten Bezugspunkt ($B_F$) eine erste Wirkung ($D_f$) hat, die zum Blicken in eine beim jeweiligen Anwendungsfall vorgesehene erste Entfernung geeignet ist, und
- daß sich diese Wirkung längs der Hauptlinie um einen vorgegebenen Wert (Addition Add) auf einen in einem zweiten Bezugspunkt vorliegenden zweiten Wert ($D_n$) ändert, der zum Blicken in eine für den jeweiligen Anwendungsfall vorgesehene zweite Entfernung geeignet ist, und

dessen zweite Fläche gegebenenfalls einen optional zum Teil zum Ausgleich eines Augenastimatismus und/oder Astigmatismus schiefer Bündel geeigneten Flächenastigmatismus aufweist, mit folgenden Fertigungsschritten:

- zunächst werden Brillenglasrohlinge (Blanks) mit fertiger erster Fläche in einer bestimmten, vergleichsweise engen Abstufung des Flächenbrechwerts ($D_1$) hergestellt,
- ausgehend von den individuellen Daten, nämlich zumindest der jeweils benötigten ersten Wirkung $D_f$, der Addition Add und gegebenenfalls dem Wert und der Achslage des Augenastimatismus des Brillenträgers, für den das jeweilige Brillenglas bestimmt ist, wird aufgrund weiterer Design-Daten davon mindestens der individuelle Hornhaut/Scheitelabstand für den bestimmten Brillenträger eine erste Fläche mit einem bestimmten Flächenbrechwert $D_1$ ausgewählt und die zweite Fläche derart berechnet, daß der im ersten Bezugspunkt benötigte Flächenbrechwert $D_{2f}$ der zweiten Fläche entsprechend dem jeweils gewählten Flächenbrechwert $D_1$ eingestellt ist, so daß sich in Abhängigkeit von den jeweiligen Design-Daten für ein- und dieselbe erste Wirkung $D_f$ und ein- und dieselbe Addition Add sowie gegebenenfalls ein- und denselben Wert und Achslage des Augenastigmatismus unterschiedliche Paarungen von ersten Flächen, die sich zumindest hinsichtlich des Flächenbrechwertes $D_1$ unterscheiden, und von zugeordneten, jeweils individuell berechneten zweiten Flächen ergeben.

2. Verfahren nach Anspruch 1,
**dadurch gekennzeichnet, daß** als erste Fläche eine sphärische oder eine rotationssymmetrische asphärische Fläche gewählt wird.

3. Verfahren nach Anspruch 1,
**dadurch gekennzeichnet, daß** als erste Fläche eine Fläche gewählt wird, deren Hauptschnitte unterschiedlich gestaltet sind.

4. Verfahren nach Anspruch 3,
**dadurch gekennzeichnet, daß** die erste Fläche teilweise oder vollständig zum Ausgleich eines Augenastimatismus und/oder Astigmatismus schiefer Bündel geeigneten Flächenastigmatismus beiträgt.

5. Verfahren nach einem der Ansprüche 1 bis 4,
**dadurch gekennzeichnet, daß** die erste Fläche die Vorderfläche ist.

6. Verfahren nach einem der Ansprüche 3 bis 5,
**dadurch gekennzeichnet, daß** die erste Fläche aus kosmetischen Gründen in Horizontalrichtung stärker als in Vertikalrichtung durchgebogen ist.

7. Verfahren nach Anspruch 5 oder 6,
**dadurch gekennzeichnet, daß** der Flächenbrechwert $D_1$ der ersten Fläche im Scheitel zwischen 0 dpt und 15 dpt gewählt wird.

8. Verfahren nach einem der Ansprüche 1 bis 7,
**dadurch gekennzeichnet, daß** für die Design-Daten, die für die Auswahl der ersten Fläche mit dem Flächenbrechwert $D_1$ im Scheitel herangezogen werden, in Abhängigkeit von der jeweiligen Gewichtung folgende Gesichtspunkte herangezogen werden:

Kosmetische Eigenschaften: Augenvergrößerung, Durchbiegung, Wimperanschlag
Geometrische Eigenschaften: Gewicht,
Bauhöhe,
Dicke,
Fassungsform,
Optische Eigenschaften: Reflexionen,
Abbildungsgüte

9. Verfahren nach einem der Ansprüche 1 bis 8,
**dadurch gekennzeichnet, daß** bei den Design-Daten und zusätzlich bei der Gestaltung der progessiven Rezeptfläche weitere individuelle Daten des jeweiligen Brillenträgers berücksichtigt werden.

10. Verfahren nach Anspruch 9,
**dadurch gekennzeichnet, daß** die weiteren individuellen Daten sind

- Pupillenabstand,
- Augendrehpunktsabstand
- Augenlänge
- Vorneigung und Durchmuschelung

- Längen- bzw. Brechwertametropie
- Vertikal und/oder Horizontalprismen sowie deren Aufteilung rechts/links,
- Größe und/oder die Form der gewählten Fassung,
- Zentrierhöhe,
- Pupillendurchmesser und/oder
- Vorneigung der Gläser.

**11.** Verfahren nach einem der Ansprüche 1 bis 10,
**dadurch gekennzeichnet, daß** bei der Berechnung der Rezeptfläche der Ausgangsvisus, Modelle für die Augenbewegung und/oder Abbildungsfehler höherer Ordnung berücksichtigt werden.

**12.** Verfahren nach einem der Ansprüche 1 bis 11,
**dadurch gekennzeichnet, daß** bei der Berechnung der Rezeptflächen Anisometropien berücksichtigt werden.

**13.** Verfahren nach einem der Ansprüche 1 bis 12,
**dadurch gekennzeichnet, daß** die Flächenbrechwerte im Scheitel der insgesamt eingesetzten ersten Flächen in Schritten von 0,25 dpt abgestuft sind.

**14.** Verfahren nach einem der Ansprüche 1 bis 13,
**dadurch gekennzeichnet, daß** die Flächenbrechwerte im Scheitel der insgesamt eingesetzten ersten Flächen in Schritten von 0,5 dpt abgestuft sind.

**15.** Verfahren nach einem der Ansprüche 1 bis 13,
**dadurch gekennzeichnet, daß** die individuellen Daten des jeweiligen Brillenträgers sowie das Flächendesign mit einem bestimmten Raster für die Auswahl der jeweiligen Vorderfläche und der augenseitigen Fläche abgestuft werden.

**16.** Verfahren nach Anspruch 15,
**dadurch gekennzeichnet, daß** das Raster beträgt:

| | |
|---|---|
| für die Fernteil- und Nahteilwirkung: | 0,125dpt |
| für den Pupillenabstand: | 0,5 mm |
| für den Wert des Augenastigmatismus | 0,125 dpt |
| für die Achslage | 2,5° |
| für die Vorneigung / Durchmuschelung | 0,5° |
| für den Augendrehpunktsabstand | 0,5 mm |
| für das Prisma | 0,125 cm/m |

**17.** Verfahren nach Anspruch 15 oder 16,
**dadurch gekennzeichnet, daß** das Flächendesign für folgende Anwendungen vorgegeben ist:

- Standard (ausgewogen)
- Bildschirmarbeitsplatz (mittlere Entfernungen bevorzugt)
- Schreibtischarbeit (kleine Entfernungen bevorzugt)
- Autofahrer (asymmetrisches Design, große Entfernungen bevorzugt)
- Pilot (Nahteil oben und unten)
- Sport und insbesondere Ballsportarten mit einem Schläger (unendlich bis ca. 1 m bevorzugt)
- Uhrmacher (sehr kurze Entfernungen)
- Chirurg (im wesentlichen mittlere Entfernungen).

**18.** Verfahren nach einem der Ansprüche 1 bis 17,
**dadurch gekennzeichnet, daß** die Lage und Größe der einzelnen Sehbereiche verordnungsabhängig ist.

**19.** Verfahren nach Anspruch 18,
**dadurch gekennzeichnet, daß** die Lage und Größe der einzelnen Sehbereiche für Hyperope und Myope unterschiedlich ist.

**20.** Verfahren nach einem der Ansprüche 1 bis 19,
**dadurch gekennzeichnet, daß** der vertikale Abstand, der funktionelle Verlauf des Brechwerts und eines gegebenenfalls vorgesehenen Insets zwischen Fern- und Nahbezugspunkt unter physiologischen und/oder anwendungsspezifischen und/oder fassungsspezifischen Gesichtspunkten gewählt wird.

**21.** Verfahren nach einem der Ansprüche 1 bis 20,
**dadurch gekennzeichnet, daß** der Flächenbrechwert der Rezeptfläche an wenigstens einer Stelle den Wert 0 dpt annimmt.

**22.** Verfahren nach Anspruch 21,
**dadurch gekennzeichnet, daß** der Flächenbrechwert der Rezeptfläche das Vorzeichen wechselt.

**23.** Verfahren nach Anspruch 21 oder 22,
**dadurch gekennzeichnet, daß** die Stelle, an der der Wert 0 dpt erreicht wird, bzw. das Vorzeichen wechselt, in der Nähe der Hauptlinie liegt.

**24.** Verfahren nach einem der Ansprüche 1 bis 23,
**dadurch gekennzeichnet, daß** Paarungen zwischen bestimmten Vorderflächen und augenseitigen Flächen für die verschiedenen Flächendesigns und jeweils typische, häufig vorkommende anwenderspezifische Daten in einer Datenbank abgelegt sind, aus der sie bei einem Bestelleingang abgerufen werden, und
daß lediglich für weniger häufig vorkommende Kombinationen die Flächenpaarungen und die Daten der augenseitigen Fläche beim Bestelleingang berechnet werden.

**25.** Verfahren nach Anspruch 24,
**dadurch gekennzeichnet, daß** in der Datenbank zusätzlich empirisch ermittelte Informationen über die Verträglichkeit abgelegt sind, aufgrund derer unter verschiedenen, aufgrund des jeweils verwendeten Optimierungsprogramms möglichen Flächenkombinationen und/oder Flächenausbildungen ausgewählt wird.

**26.** Verfahren nach einem der Ansprüche 1 bis 25,
**dadurch gekennzeichnet, daß** die Brillenglasrohlinge (Blanks), die mit fertiger erster Fläche in einer bestimmten, vergleichsweise engen Abstufung des Flächenbrechwerts ($D_1$) hergestellt werden, lagermäßig vorgehalten werden.

**Claims**

**1.** Method for producing a progressive spectacle lens which is manufactured corresponding to the individual data of a specific spectacle wearer, and which has

- a first surface with a specific surface power ($D_1$) in the surface apex, and
- an aspherical second surface (prescription surface), the surface power ($D_2$) of which changes along a line (i.f. termed main line) which follows at least to some extent the main viewing line when looking down, in such a manner
- that the spectacle lens has a first effect ($D_f$) at a first reference point ($B_F$) which is suitable for looking into a first distance provided in the respective application case, and
- that this effect along the main line changes by a prescribed value (addition add) to a second value ($D_n$) which is present at a second reference point and is suitable for looking into a second distance provided for the respective application case, and

the second surface of which possibly has a surface astigmatism which is suitable optionally in part for compensation of an eye astigmatism and/or astigmatism of oblique beams, having the following manufacturing steps:

- firstly, spectacle lens blanks are produced with a ready-made first surface at a specific, comparatively narrow graduation of the surface power ($D_1$),
- starting from the individual data, namely at least the respectively required first effect $D_f$, the addition add and possibly the value and the axis position of the eye astigmatism of the spectacle wearer for whom the respective spectacle lens is intended, a first surface with a specific surface power $D_1$ is selected on the basis of further design data, at least the individual cornea/apex distance thereof for the specific spectacle wearer, and the second surface is calculated in such a manner that the surface power $D_{2f}$ of the second surface required at the first reference point is adjusted corresponding to the respectively chosen surface power $D_1$ so that, as a function of the respective design data, for one and the same first effect $D_r$ and one and the same addition add and also possibly one and the same value and axis position of the eye astigmatism, different pairings of first surfaces, which differ at least with respect to the surface power $D_1$, and of assigned respectively individually calculated second surfaces are produced.

2. Method according to claim 1,
**characterised in that** a spherical or a rotationally symmetrical aspherical surface is chosen as first surface.

3. Method according to claim 1,
**characterised in that** a surface, the main sections of which are configured differently, is chosen as first surface.

4. Method according to claim 3,
**characterised in that** the first surface contributes surface astigmatism partially or completely which is suitable for compensation of an eye astigmatism and/or astigmatism of oblique beams.

5. Method according to one of the claims 1 to 4,
**characterised in that** the first surface is the front surface.

6. Method according to one of the claims 3 to 5,
**characterised in that** the first surface is curved for cosmetic reasons in the horizontal direction more greatly than in the vertical direction.

7. Method according to claim 5 or 6,
**characterised in that** the surface power $D_1$ of the first surface in the apex is chosen between 0 dpt and 15 dpt.

8. Method according to one of the claims 1 to 7,
**characterised in that,** for the design data which are used for selection of the first surface with the surface power $D_1$ in the apex, the following points are used as a function of the respective weighing:

Cosmetic properties: eye enlargement,
curvature,
eyelash impingement,
Geometric properties: weight,
height,
thickness,
shape of frame,
Optical properties: reflections,
imaging quality.

9. Method according to one of the claims I to 8,
**characterised in that**, in the case of the design data and in addition in the configuration of the progressive prescription surface, further individual data of the respective spectacle wearer are taken into account.

10. Method according to claim 9,
**characterised in that** the further individual data are:

- pupil distance
- eye pivot distance
- eye length
- forward inclination and cupping
- length or power ametropia
- vertical and/or horizontal prisms and also division thereof to the right/left
- size and/or shape of the chosen frame
- centring height
- pupil diameter and/or
- forward inclination of the lenses.

**11.** Method according to one of the claims 1 to 10,
**characterised in that**, during calculation of the prescription surface of the initial visus, models for the eye movement and/or imaging aberrations of a higher order are taken into account.

**12.** Method according to one of the claims 1 to 11,
**characterised in that** anisometropias are taken into account in the calculation of the prescription surfaces.

**13.** Method according to one of the claims 1 to 12,
**characterised in that** the surface powers in the apex of the first surfaces used in total are graduated in steps of 0.25 dpt.

**14.** Method according to one of the claims 1 to 13,
**characterised in that** the surface powers in the apex of the first surfaces used in total are graduated in steps of 0.5 dpt.

**15.** Method according to one of the claims 1 to 13,
**characterised in that** the individual data of the respective spectacle wearer and also the surface design are graduated with a specific grid for selection of the respective front surface and the eye-side surface.

**16.** Method according to claim 15,
**characterised in that** the grid is:

for the distance part and near part effect: 0.125 dpt
for the pupil distance 0.5 mm
for the value of the eye astigmatism 0.125 dpt
for the axis position 2.5°
for the forward inclination/cupping 0.5°
for the eye pivot distance 0.5 mm
for the prism 0.125 cm/m

**17.** Method according to claim 15 or 16,
**characterised in that** the surface design is prescribed for the following applications:

- Standard (balanced)
- VDU work station (middle distances preferred)
- desk work (small distances preferred)
- car drivers (asymmetrical design, large distances preferred)
- pilot (near part above and below)
- sport and particularly types of ball sports with a racquet (infinity to approx. 1 m preferred)
- watchmaker (very short distances)
- surgeon (essentially middle distances).

**18.** Method according to one of the claims 1 to 17,
**characterised in that** the position and size of the individual visual ranges is prescription-dependent.

**19.** Method according to claim 18,
**characterised in that** the position and size of the individual visual ranges for hyperopia and myopia is different.

**20.** Method according to one of the claims 1 to 19,
**characterised in that** the vertical distance, the functional course of the power and of a possibly provided inset between distance and near reference point is chosen with reference to physiological and/or application-specific and/or frame-specific points.

**21.** Method according to one of the claims 1 to 20,
**characterised in that** the surface power of the prescription surface adopts the value 0 dpt at at least one position.

**22.** Method according to claim 21,
**characterised in that** the surface power of the prescription surface changes sign.

**23.** Method according to claim 21 or 22,
**characterised in that** the position at which the value 0 dpt is reached or the sign changes is in the vicinity of the main line.

**24.** Method according to one of the claims 1 to 23,
**characterised in that** pairings between specific front surfaces and eye-side surfaces for the different surface designs and respectively typical, frequently occurring user-specific data are stored in a data bank from which they are called up when an order is input, and
**in that** the surface pairings and the data of the eye-side surface are calculated when the order is input only for less frequently occurring combinations.

**25.** Method according to claim 24,
**characterised in that** in addition empirically determined information relating to compatibility is stored in the data bank, on the basis of which a selection is made from different surface combinations and/or surface configurations which are possible on the basis of the respectively used optimisation programme.

**26.** Method according to one of the claims 1 to 25,
**characterised in that** the spectacle lens blanks which are produced with a ready-made first surface in a specific, comparatively narrow graduation of the surface power ($D_1$) are kept in stock.

**Revendications**

**1.** Procédé en vue de la fabrication d'un verre de lunettes progressif, qui est fabriqué conformément aux données individuelles d'un porteur de lunettes déterminé, et qui présente

- une première surface ayant une valeur d'indice dé réfraction de surface déterminée ($D_1$) dans le sommet de la surface, et
- une seconde surface asphérique (surface prescrite), dont la valeur d'indice de réfraction de surface ($D_2$) se modifie le long d'une ligne (désignée ci-après par le terme de ligne principale), qui suit tout au moins en gros la ligne de vision principale en baissant le regard, de telle sorte
- que le verre de lunette a une première action ($D_f$) dans un premier point de référence ($B_F$) qui est appropriée à la vision dans un premier éloignement prévu pour le cas d'application correspondant, et
- de telle sorte que cette action se modifie, le long de la ligne principale, d'une valeur prédéterminée (valeur Addition Add) à une seconde valeur ($D_n$) présente dans un second point de référence, qui est approprié à la vision dans un second éloignement prévu pour le cas d'application correspondant, et

dont la seconde surface présente, le cas échéant, un astigmatisme de surface approprié en option en partie à la compensation d'un astigmatisme de l'oeil et/ou de l'astigmatisme de faisceaux inclinés, à l'aide des étapes de fabrication suivantes :

- on fabrique tout d'abord des ébauches de verre de lunettes (blanks) avec une première surface finie dans une gradation déterminée, comparativement étroite, de la valeur d'indice de réfraction de surface ($D_1$),
- en partant des données individuelles, à savoir tout au moins la première action nécessaire à chaque fois $D_f$, la valeur Addition Add et, le cas échéant, la valeur et la position axiale de l'astigmatisme d'oeil du porteur de lunettes, pour lequel le verre de lunette correspondant est destiné, on sélectionne, sur la base de données de design supplémentaires, dont tout au moins l'écart individuel cornée de l'oeil/sommet pour le porteur de lunette déterminé, une première surface ayant une valeur d'indice de réfraction de surface déterminée $D_1$ et on calcule la seconde surface de telle sorte que la valeur d'indice de réfraction de surface nécessaire dans le premier point de référence $D_{2f}$ de la seconde surface est ajustée en fonction de la valeur d'indice de réfraction de surface $D_1$ souhaitée à chaque fois, à tel point que, en fonction des données de design correspondantes pour une et la même première action $D_f$ et pour une et la même valeur Addition Add ainsi que, le cas échéant, pour une et la même valeur et la position axiale de l'astigmatisme d'oeil, il en résulte des appariements différents de la première surface, qui se différentient tout au moins pour ce qui est de la valeur d'indice de réfraction de surface $D_1$ et de la seconde surface attribuée, calculée à chaque fois individuellement.

**2.** Procédé selon la revendication 1,
**caractérisé en ce que** l'on sélectionne, en tant que première surface, une surface sphérique ou une surface asphérique à symétrie de rotation.

3. Procédé selon la revendication 1,
**caractérisé en ce que** l'on sélectionne, en tant que première surface, une surface dont les coupes principales sont réalisées d'une manière différente.

4. Procédé selon la revendication 3,
**caractérisé en ce que** la première surface contribue, partiellement ou complètement, à la compensation d'un astigmatisme d'oeil et/ou de l'astigmatisme de faisceaux inclinés d'astigmatisme de surface approprié.

5. Procédé selon l'une quelconque des revendications 1 à 4,
**caractérisé en ce que** la première surface est la surface avant.

6. Procédé selon l'une quelconque des revendications 3 à 5,
**caractérisé en ce que** la première surface est courbée, pour des raisons cosmétiques, plus fortement dans la direction horizontale que dans la direction verticale.

7. Procédé selon la revendication 5 ou 6,
**caractérisé en ce que** la valeur d'indice de réfraction de surface $D_1$ de la première surface au sommet est sélectionnée entre 0 dpt et 15 dpt.

8. Procédé selon l'une quelconque des revendications 1 à 7,
**caractérisé en ce que,** pour les données de design, qui sont prises en compte pour la sélection de la première $D_1$ au sommet, on prend en compte, en fonction de la pondération correspondante, les points de vue suivants :

Propriétés cosmétiques : Grossissement des yeux
Courbure
Impact des cils
Propriétés géométriques : Poids
Hauteur de construction
Épaisseur
Forme de la monture
Propriétés optiques : Réflexions
Qualité de l'image

9. Procédé selon l'une quelconque des revendications 1 à 8,
**caractérisé en ce que,** pour les données de design et, en sus, pour la réalisation de la surface progressive prescrite, on prend en compte des données individuelles supplémentaires du porteur de lunettes correspondant.

10. Procédé selon la revendication 9,
**caractérisé en ce que** les données individuelles supplémentaires sont

- l'écart des pupilles
- l'écart des points de rotation des yeux
- les longueurs des yeux
- la pré-inclinaison et la courbure
- l'amétropie longitudinale ou l'amétropie d'indice de réfraction
- les prismes verticaux et/ou horizontaux ainsi que leur répartition droite/gauche
- la grandeur et/ou la forme de la monture sélectionnée
- la hauteur de centrage
- le diamètre des pupilles et/ou
- la pré-inclinaison des verres.

11. Procédé selon l'une quelconque des revendications 1 à 10,
**caractérisé en ce que,** lors du calcul de la surface prescrite de la vision de sortie, on tiendra compte de modèles pour le mouvement des yeux et/ou pour les erreurs de formation d'images d'ordre plus élevé.

12. Procédé selon l'une quelconque des revendications 1 à 11,

**caractérisé en ce que**, lors du calcul des surfaces prescrites, on prend en compte les anisométropies.

**13.** Procédé selon l'une quelconque des revendications 1 à 12,
**caractérisé en ce que** les valeurs d'indice de réfraction de la surface sont échelonnées en incréments de 0,25 dpt dans le sommet des premières surfaces utilisées au total.

**14.** Procédé selon l'une quelconque des revendications 1 à 13,
**caractérisé en ce que** les valeurs d'indice de réfraction de la surface sont échelonnées en incréments de 0,5 dpt dans le sommet des premières surfaces utilisées au total.

**15.** Procédé selon l'une quelconque des revendications 1 à 13,
**caractérisé en ce que** les données individuelles du porteur de lunettes correspondant ainsi que le design des surfaces sont échelonnées à l'aide d'une grille déterminée en vue de la sélection de la surface avant et de la surface tournée vers l'oeil.

**16.** Procédé selon la revendication 15,
**caractérisé en ce que** la grille est :

    pour l'action en position éloignée et en position proche 0,125 dpt
    pour l'écart des pupilles 0,5 mm
    pour la valeur de l'astigmatisme d'oeil 0,125 dpt
    pour la position axiale 2,5°
    pour la pré-inclinaison/la courbure 0,5°
    pour l'écart des points de rotation des yeux 0,5 mm
    pour le prisme 0,125 cm/m

**17.** Procédé selon la revendication 15 ou 16,
**caractérisé en ce que** le design de surface pour les applications suivantes est prédéterminé :

    - standard (équilibré)
    - place de travail à écran (éloignements moyens préférés)
    - travail à la place de bureau (éloignements petits préférés)
    - conducteur de véhicule (design asymétrique, éloignements importants préférés)
    - pilote (portion proche en haut et en bas)
    - sport et, en particulier sports à balles avec raquette (de préférence, infini à environ 1 m)
    - horlogers (éloignements très courts)
    - chirurgie (pour l'essentiel éloignements moyens).

**18.** Procédé selon l'une quelconque des revendications 1 à 17,
**caractérisé en ce que** la situation et la grandeur des domaines de vision individuels dépendent de la prescription.

**19.** Procédé selon la revendication 18,
**caractérisé en ce que** la situation et la grandeur des domaines de vision individuels sont différentes pour les hypermétropes et les myopes.

**20.** Procédé selon l'une quelconque des revendications 1 à 19,
**caractérisé en ce que** l'écart vertical, le déroulement fonctionnel de l'indice de réfraction et d'un insert prévu, le cas échéant, entre le point de référence éloigné et proche sont sélectionnés selon des points de vue physiologiques et/ou spécifiques à l'application et/ou spécifiques à la monture.

**21.** Procédé selon l'une quelconque des revendications 1 à 20,
**caractérisé en ce que** la valeur d'indice de réfraction de surface de la surface prescrite prend au moins en un endroit la valeur 0 dpt.

**22.** Procédé selon la revendication 21,
**caractérisé en ce que** la valeur d'indice de réfraction de surface de la surface prescrite change de signe.

**23.** Procédé selon la revendication 21 ou 22,

**caractérisé en ce que** l'endroit pour lequel la valeur 0 dpt est atteinte ou pour lequel le signe change de valeur, se situe à proximité de la ligne principale.

24. Procédé selon l'une quelconque des revendications 1 à 23,
**caractérisé en ce que** les appariements entre les surfaces avant et les surfaces tournées vers l'oeil déterminées sont déposés dans une banque de données pour les différents designs de surface et à chaque fois pour les données typiques, spécifiques à l'utilisateur, se produisant fréquemment, banque de données à partir de laquelle ils peuvent être extraits en cas de l'arrivée d'une commande et **en ce que**, simplement pour des combinaisons se produisant moins fréquemment, les appariements de surface et les données sont calculées au moment de l'arrivée de la commande.

25. Procédé selon la revendication 24,
**caractérisé en ce que** l'on dépose, dans la banque de données, en outre, des informations sur la compatibilité, déterminées par voie empirique, sur la base desquelles on procède à la sélection, à l'aide du programme d'optimisation utilisé à chaque fois, des différentes combinaisons de surfaces et/ou des formations de surface possibles.

26. Procédé selon l'une quelconque des revendications 1 à 25,
**caractérisé en ce que** les ébauches de verre de lunettes (blanks), qui sont fabriquées avec une première surface finie dans un échelonnement déterminé, comparativement étroit, de la valeur d'indice de réfraction de surface ($D_1$), sont obtenues par pré-stockage.

Pfeilhöhen:

| 0 | -20 | -17,5 | -15 | -12,5 | -10 | -7,5 | -5 | -2,5 | 0 |
|---|---|---|---|---|---|---|---|---|---|
| 20 | 0 | 0 | 0 | 0 | 0 | 0 | 0 | 0 | 1,88114 |
| 17,5 | 0 | 0 | 0 | 0 | 0 | 1,727544 | 1,572749 | 1,476457 | 1,43867 |
| 15 | 0 | 0 | 0 | 1,826893 | 1,556258 | 1,343761 | 1,189465 | 1,093506 | 1,055966 |
| 12,5 | 0 | 0 | 1,827844 | 1,500623 | 1,231244 | 1,019591 | 0,865786 | 0,770078 | 0,732707 |
| 10 | 0 | 0 | 1,558189 | 1,232921 | 0,965089 | 0,754524 | 0,601373 | 0,505935 | 0,468649 |
| 7,5 | 0 | 1,726383 | 1,345574 | 1,022576 | 0,756795 | 0,547868 | 0,39579 | 0,300844 | 0,263672 |
| 5 | 0 | 1,566588 | 1,188478 | 0,868198 | 0,605063 | 0,398525 | 0,248337 | 0,154463 | 0,117588 |
| 2,5 | 0 | 1,459495 | 1,084527 | 0,767617 | 0,508048 | 0,305076 | 0,15802 | 0,066273 | 0,030092 |
| 0 | 1,833183 | 1,402774 | 1,031483 | 0,718726 | 0,463772 | 0,26566 | 0,123183 | 0,035027 | 0,00048 |
| -2,5 | 0 | 1,394456 | 1,027487 | 0,719736 | 0,470458 | 0,278427 | 0,141793 | 0,058484 | 0,026833 |
| -5 | 0 | 1,432945 | 1,070942 | 0,768862 | 0,525984 | 0,340808 | 0,210844 | 0,133162 | 0,105213 |
| -7,5 | 0 | 1,51707 | 1,160674 | 0,864715 | 0,628528 | 0,450405 | 0,32724 | 0,255205 | 0,230946 |
| -10 | 0 | 0 | 1,296365 | 1,00678 | 0,777293 | 0,605921 | 0,488983 | 0,42183 | 0,400599 |
| -12,5 | 0 | 0 | 1,479087 | 1,195879 | 0,972726 | 0,807223 | 0,695213 | 0,631598 | 0,61234 |
| -15 | 0 | 0 | 0 | 1,43296 | 1,214957 | 1,053701 | 0,944992 | 0,883608 | 0,86536 |
| -17,5 | 0 | 0 | 0 | 0 | 0 | 1,344445 | 1,237531 | 1,177299 | 1,159499 |
| -20 | 0 | 0 | 0 | 0 | 0 | 0 | 0 | 0 | 1,494969 |

| 0 | 2,5 | 5 | 7,5 | 10 | 12,5 | 15 | 17,5 | 20 |
|---|---|---|---|---|---|---|---|---|
| 20 | 0 | 0 | 0 | 0 | 0 | 0 | 0 | 0 |
| 17,5 | 1,459338 | 1,538288 | 1,675159 | 0 | 0 | 0 | 0 | 0 |
| 15 | 1,076827 | 1,155872 | 1,292618 | 1,4865 | 1,737064 | 0 | 0 | 0 |
| 12,5 | 0,753727 | 0,832805 | 0,969293 | 1,162491 | 1,41186 | 1,717203 | 0 | 0 |
| 10 | 0,489795 | 0,568789 | 0,704732 | 0,896843 | 1,144544 | 1,447722 | 0 | 0 |
| 7,5 | 0,28482 | 0,36345 | 0,498312 | 0,688619 | 0,933952 | 1,234434 | 1,590531 | 0 |
| 5 | 0,138583 | 0,216248 | 0,349126 | 0,536661 | 0,778744 | 1,075794 | 1,428451 | 0 |
| 2,5 | 0,050725 | 0,126539 | 0,256119 | 0,439446 | 0,677017 | 0,969632 | 1,318088 | 0 |
| 0 | 0,020498 | 0,093392 | 0,218221 | 0,395724 | 0,62728 | 0,914254 | 1,257604 | 1,658066 |
| -2,5 | 0,046199 | 0,115437 | 0,23443 | 0,404667 | 0,628679 | 0,908687 | 1,245883 | 0 |
| -5 | 0,124484 | 0,189993 | 0,302891 | 0,46531 | 0,680802 | 0,952663 | 1,282563 | 0 |
| -7,5 | 0,250899 | 0,313413 | 0,420938 | 0,576172 | 0,783244 | 1,046462 | 1,368183 | 0 |
| -10 | 0,421421 | 0,482323 | 0,585923 | 0,735457 | 0,935213 | 1,190203 | 0 | 0 |
| -12,5 | 0,633866 | 0,694298 | 0,795689 | 0,941459 | 1,135746 | 1,383841 | 0 | 0 |
| -15 | 0,887307 | 0,947892 | 1,048564 | 1,192212 | 1,38304 | 0 | 0 | 0 |
| -17,5 | 1,181572 | 1,242623 | 1,343387 | 0 | 0 | 0 | 0 | 0 |
| -20 | 0 | 0 | 0 | 0 | 0 | 0 | 0 | 0 |

## Fig. 1a

Astigmatismus (Kom. Glas+Auge)

Fig. 1b

**Fig. 1c**

Fig. 1d

Fig. 1e

Pfeilhöhen:

| 0 | -20 | -17,5 | -15 | -12,5 | -10 | -7,5 | -5 | -2,5 | 0 |
|---|---|---|---|---|---|---|---|---|---|
| 20 | 0 | 0 | 0 | 0 | 0 | 0 | 0 | 0 | 1,863159 |
| 17,5 | 0 | 0 | 0 | 0 | 0 | 1,713431 | 1,559597 | 1,463879 | 1,426279 |
| 15 | 0 | 0 | 0 | 1,814691 | 1,545607 | 1,334283 | 1,180808 | 1,085335 | 1,047946 |
| 12,5 | 0 | 0 | 1,817928 | 1,492398 | 1,224321 | 1,013638 | 0,860507 | 0,765194 | 0,727941 |
| 10 | 0 | 0 | 1,551597 | 1,22773 | 0,960937 | 0,751121 | 0,598481 | 0,503342 | 0,466141 |
| 7,5 | 0 | 1,720774 | 1,34152 | 1,019638 | 0,754625 | 0,546206 | 0,394455 | 0,2997 | 0,262583 |
| 5 | 0 | 1,563111 | 1,186309 | 0,866886 | 0,604259 | 0,397983 | 0,247914 | 0,154101 | 0,117244 |
| 2,5 | 0 | 1,457542 | 1,083694 | 0,76743 | 0,50814 | 0,305203 | 0,158065 | 0,066241 | 0,030034 |
| 0 | 1,830565 | 1,40174 | 1,031453 | 0,719197 | 0,464364 | 0,266129 | 0,123429 | 0,035094 | 0,000481 |
| -2,5 | 0 | 1,393647 | 1,027636 | 0,720335 | 0,471125 | 0,278936 | 0,142058 | 0,058561 | 0,026865 |
| -5 | 0 | 1,431506 | 1,070482 | 0,768893 | 0,526155 | 0,340932 | 0,210864 | 0,133127 | 0,105253 |
| -7,5 | 0 | 1,513988 | 1,158641 | 0,863288 | 0,627413 | 0,449478 | 0,326492 | 0,254673 | 0,230694 |
| -10 | 0 | 0 | 1,291739 | 1,002913 | 0,773978 | 0,603099 | 0,486693 | 0,420087 | 0,399381 |
| -12,5 | 0 | 0 | 1,470987 | 1,18868 | 0,96633 | 0,801624 | 0,690475 | 0,6277 | 0,609175 |
| -15 | 0 | 0 | 0 | 1,421637 | 1,204619 | 1,044387 | 0,936771 | 0,876431 | 0,859052 |
| -17,5 | 0 | 0 | 0 | 0 | 0 | 1,330393 | 1,224673 | 1,165587 | 1,148724 |
| -20 | 0 | 0 | 0 | 0 | 0 | 0 | 0 | 0 | 1,478348 |

| 0 | 2,5 | 5 | 7,5 | 10 | 12,5 | 15 | 17,5 | 20 |
|---|---|---|---|---|---|---|---|---|
| 20 | 0 | 0 | 0 | 0 | 0 | 0 | 0 | 0 |
| 17,5 | 1,446742 | 1,525089 | 1,660949 | 0 | 0 | 0 | 0 | 0 |
| 15 | 1,068624 | 1,14714 | 1,283004 | 1,475621 | 1,724487 | 0 | 0 | 0 |
| 12,5 | 0,748801 | 0,827434 | 0,96318 | 1,155306 | 1,403207 | 1,706598 | 0 | 0 |
| 10 | 0,487156 | 0,565798 | 0,701157 | 0,892405 | 1,138875 | 1,440352 | 0 | 0 |
| 7,5 | 0,283629 | 0,362012 | 0,496472 | 0,686141 | 0,930483 | 1,229496 | 1,583527 | 0 |
| 5 | 0,138174 | 0,215724 | 0,348404 | 0,535528 | 0,776835 | 1,072602 | 1,423349 | 0 |
| 2,5 | 0,050649 | 0,126498 | 0,256084 | 0,439204 | 0,676165 | 0,967619 | 1,314241 | 0 |
| 0 | 0,020553 | 0,09362 | 0,218612 | 0,396033 | 0,627053 | 0,912895 | 1,254395 | 1,652185 |
| -2,5 | 0,046367 | 0,115871 | 0,235083 | 0,405233 | 0,628653 | 0,907447 | 1,242688 | 0 |
| -5 | 0,124772 | 0,190572 | 0,303627 | 0,465825 | 0,680542 | 0,950999 | 1,278758 | 0 |
| -7,5 | 0,251041 | 0,313835 | 0,421376 | 0,576191 | 0,782252 | 1,043815 | 1,363169 | 0 |
| -10 | 0,420719 | 0,481895 | 0,585365 | 0,734297 | 0,932838 | 1,185937 | 0 | 0 |
| -12,5 | 0,631287 | 0,691979 | 0,793141 | 0,938177 | 1,13112 | 1,377177 | 0 | 0 |
| -15 | 0,881609 | 0,942421 | 1,04282 | 1,185658 | 1,375067 | 0 | 0 | 0 |
| -17,5 | 1,171396 | 1,232634 | 1,333105 | 0 | 0 | 0 | 0 | 0 |
| -20 | 0 | 0 | 0 | 0 | 0 | 0 | 0 | 0 |

**Fig. 2a**

Fig. 2b

**Fig. 2c**

**Fig. 2d**

**Fig. 2e**

Pfeilhöhen:

| 0 | -20 | -17,5 | -15 | -12,5 | -10 | -7,5 | -5 | -2,5 | 0 |
|---|---|---|---|---|---|---|---|---|---|
| 20 | 0 | 0 | 0 | 0 | 0 | 0 | 0 | 0 | 1,463192 |
| 17,5 | 0 | 0 | 0 | 0 | 0 | 1,351751 | 1,230516 | 1,154267 | 1,123188 |
| 15 | 0 | 0 | 0 | 1,432649 | 1,222377 | 1,056285 | 0,934816 | 0,858412 | 0,827363 |
| 12,5 | 0 | 0 | 1,435241 | 1,181539 | 0,971452 | 0,80533 | 0,683694 | 0,607109 | 0,576043 |
| 10 | 0 | 0 | 1,227201 | 0,974334 | 0,764837 | 0,599018 | 0,477446 | 0,400755 | 0,369616 |
| 7,5 | 0 | 1,35686 | 1,061981 | 0,810421 | 0,602142 | 0,437275 | 0,316257 | 0,239735 | 0,208596 |
| 5 | 0 | 1,231614 | 0,938551 | 0,688921 | 0,48261 | 0,319572 | 0,200009 | 0,124279 | 0,093338 |
| 2,5 | 0 | 1,145583 | 0,854972 | 0,608102 | 0,404841 | 0,24496 | 0,12822 | 0,054403 | 0,024064 |
| 0 | 1,428494 | 1,096785 | 0,809336 | 0,566173 | 0,367188 | 0,211947 | 0,099648 | 0,029303 | 0,000479 |
| -2,5 | 0 | 1,083532 | 0,800033 | 0,561595 | 0,368122 | 0,218933 | 0,112509 | 0,047001 | 0,020916 |
| -5 | 0 | 1,10447 | 0,825692 | 0,592805 | 0,405729 | 0,263502 | 0,163875 | 0,104027 | 0,081486 |
| -7,5 | 0 | 1,158712 | 0,885421 | 0,658653 | 0,478363 | 0,343326 | 0,25058 | 0,196349 | 0,177314 |
| -10 | 0 | 0 | 0,979146 | 0,758828 | 0,585318 | 0,457079 | 0,37049 | 0,320968 | 0,304702 |
| -12,5 | 0 | 0 | 1,108029 | 0,894145 | 0,726942 | 0,604462 | 0,522565 | 0,476302 | 0,46173 |
| -15 | 0 | 0 | 0 | 1,065304 | 0,90314 | 0,784706 | 0,705826 | 0,661476 | 0,647667 |
| -17,5 | 0 | 0 | 0 | 0 | 0 | 0,996895 | 0,919563 | 0,876091 | 0,862511 |
| -20 | 0 | 0 | 0 | 0 | 0 | 0 | 0 | 0 | 1,106712 |

| 0 | 2,5 | 5 | 7,5 | 10 | 12,5 | 15 | 17,5 | 20 |
|---|---|---|---|---|---|---|---|---|
| 20 | 0 | 0 | 0 | 0 | 0 | 0 | 0 | 0 |
| 17,5 | 1,137299 | 1,196414 | 1,300091 | 0 | 0 | 0 | 0 | 0 |
| 15 | 0,841728 | 0,901269 | 1,005406 | 1,153389 | 1,344503 | 0 | 0 | 0 |
| 12,5 | 0,590642 | 0,650549 | 0,754992 | 0,903076 | 1,09398 | 1,327145 | 0 | 0 |
| 10 | 0,384431 | 0,444568 | 0,549005 | 0,696743 | 0,886902 | 1,118987 | 0 | 0 |
| 7,5 | 0,223489 | 0,283546 | 0,3874 | 0,534022 | 0,722666 | 0,953043 | 1,22513 | 0 |
| 5 | 0,108139 | 0,167477 | 0,269782 | 0,414245 | 0,600403 | 0,828231 | 1,097849 | 0 |
| 2,5 | 0,038523 | 0,096156 | 0,195487 | 0,336256 | 0,518581 | 0,742766 | 1,009047 | 0 |
| 0 | 0,014248 | 0,068934 | 0,163658 | 0,298981 | 0,475882 | 0,69515 | 0,95711 | 1,261866 |
| -2,5 | 0,033792 | 0,084599 | 0,173402 | 0,301649 | 0,471495 | 0,684467 | 0,941018 | 0 |
| -5 | 0,093825 | 0,140525 | 0,222954 | 0,343364 | 0,505026 | 0,710451 | 0,960427 | 0 |
| -7,5 | 0,189843 | 0,233084 | 0,309789 | 0,42283 | 0,57621 | 0,773454 | 1,015905 | 0 |
| -10 | 0,317756 | 0,358953 | 0,431424 | 0,538505 | 0,684523 | 0,873797 | 0 | 0 |
| -12,5 | 0,475298 | 0,515786 | 0,585814 | 0,688904 | 0,829288 | 1,011708 | 0 | 0 |
| -15 | 0,661588 | 0,702177 | 0,771337 | 0,872168 | 1,008931 | 0 | 0 | 0 |
| -17,5 | 0,876573 | 0,917681 | 0,986887 | 0 | 0 | 0 | 0 | 0 |
| -20 | 0 | 0 | 0 | 0 | 0 | 0 | 0 | 0 |

## Fig. 3a

28

Astigmatismus (Kom. Glas+Auge)

**Fig. 3b**

Brechwert (S'-S)

**Fig. 3c**

Fig. 3d

Mittl. Flaechenbrechwert

**Fig. 3e**

Pfeilhöhen:

| 0 | -20 | -17,5 | -15 | -12,5 | -10 | -7,5 | -5 | -2,5 | 0 |
|---|---|---|---|---|---|---|---|---|---|
| 20 | 0 | 0 | 0 | 0 | 0 | 0 | 0 | 0 | 1,659511 |
| 17,5 | 0 | 0 | 0 | 0 | 0 | 1,50138 | 1,379958 | 1,303651 | 1,272636 |
| 15 | 0 | 0 | 0 | 1,542449 | 1,331838 | 1,165525 | 1,043953 | 0,967554 | 0,936603 |
| 12,5 | 0 | 0 | 1,511323 | 1,257288 | 1,046964 | 0,880706 | 0,759034 | 0,682506 | 0,651567 |
| 10 | 0 | 0 | 1,275555 | 1,022451 | 0,812796 | 0,646908 | 0,525351 | 0,448755 | 0,417772 |
| 7,5 | 0 | 1,384017 | 1,088928 | 0,837204 | 0,628823 | 0,463931 | 0,342966 | 0,266564 | 0,235592 |
| 5 | 0 | 1,243534 | 0,950325 | 0,700575 | 0,49419 | 0,331146 | 0,211657 | 0,13607 | 0,105312 |
| 2,5 | 0 | 1,148451 | 0,857733 | 0,610758 | 0,407419 | 0,24752 | 0,130852 | 0,057195 | 0,027055 |
| 0 | 1,428472 | 1,096717 | 0,809173 | 0,565888 | 0,366782 | 0,211471 | 0,099215 | 0,029052 | 0,000481 |
| -2,5 | 0 | 1,086557 | 0,802936 | 0,564317 | 0,370641 | 0,221298 | 0,11488 | 0,049592 | 0,023896 |
| -5 | 0 | 1,116483 | 0,837507 | 0,604327 | 0,416932 | 0,274467 | 0,174837 | 0,115297 | 0,093357 |
| -7,5 | 0 | 1,185454 | 0,911829 | 0,684631 | 0,503912 | 0,368602 | 0,275938 | 0,222187 | 0,203995 |
| -10 | 0 | 0 | 1,025783 | 0,804908 | 0,63094 | 0,502494 | 0,416174 | 0,367378 | 0,352221 |
| -12,5 | 0 | 0 | 1,180632 | 0,966146 | 0,798566 | 0,676059 | 0,594688 | 0,549413 | 0,53619 |
| -15 | 0 | 0 | 0 | 1,169289 | 1,006916 | 0,888686 | 0,810566 | 0,767439 | 0,75515 |
| -17,5 | 0 | 0 | 0 | 0 | 0 | 1,139476 | 1,063086 | 1,021001 | 1,009067 |
| -20 | 0 | 0 | 0 | 0 | 0 | 0 | 0 | 0 | 1,298354 |

| 0 | 2,5 | 5 | 7,5 | 10 | 12,5 | 15 | 17,5 | 20 |
|---|---|---|---|---|---|---|---|---|
| 20 | 0 | 0 | 0 | 0 | 0 | 0 | 0 | 0 |
| 17,5 | 1,286926 | 1,346322 | 1,450361 | 0 | 0 | 0 | 0 | 0 |
| 15 | 0,951153 | 1,010952 | 1,115402 | 1,263729 | 1,455195 | 0 | 0 | 0 |
| 12,5 | 0,666353 | 0,726494 | 0,831205 | 0,979561 | 1,170717 | 1,404099 | 0 | 0 |
| 10 | 0,432768 | 0,49312 | 0,597781 | 0,745722 | 0,93604 | 1,168227 | 0 | 0 |
| 7,5 | 0,250671 | 0,310929 | 0,414968 | 0,561729 | 0,750443 | 0,980815 | 1,252824 | 0 |
| 5 | 0,120303 | 0,17983 | 0,282288 | 0,42683 | 0,612975 | 0,840698 | 1,110129 | 0 |
| 2,5 | 0,041724 | 0,099567 | 0,199042 | 0,33984 | 0,522071 | 0,746055 | 1,012047 | 0 |
| 0 | 0,014532 | 0,069517 | 0,164418 | 0,299733 | 0,476453 | 0,695415 | 0,956982 | 1,261273 |
| -2,5 | 0,037234 | 0,088517 | 0,177598 | 0,305833 | 0,475407 | 0,687952 | 0,94399 | 0 |
| -5 | 0,106518 | 0,153939 | 0,236827 | 0,357304 | 0,518642 | 0,723519 | 0,972842 | 0 |
| -7,5 | 0,217754 | 0,262028 | 0,339427 | 0,452722 | 0,605842 | 0,802481 | 1,044176 | 0 |
| -10 | 0,366784 | 0,409332 | 0,482737 | 0,590319 | 0,736259 | 0,924994 | 0 | 0 |
| -12,5 | 0,551412 | 0,593445 | 0,664619 | 0,768447 | 0,908996 | 1,091047 | 0 | 0 |
| -15 | 0,770786 | 0,813003 | 0,883481 | 0,985229 | 1,122374 | 0 | 0 | 0 |
| -17,5 | 1,024861 | 1,067625 | 1,138261 | 0 | 0 | 0 | 0 | 0 |
| -20 | 0 | 0 | 0 | 0 | 0 | 0 | 0 | 0 |

**Fig. 4a**

Astigmatismus (Kom. Glas+Auge)

**Fig. 4b**

**Fig. 4c**

Flaechenastigmatismus

**Fig. 4d**

Fig. 4e

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US PS2878721 A
- DE 4337369 A
- DE 19701312 A
- DE 433736 A
- DE 19701312 A1